(19) Europäisches Patentamt
European Patent Office
Office européen des brevets

(11) EP 2 963 082 B1

(12) **EUROPEAN PATENT SPECIFICATION**

(45) Date of publication and mention of the grant of the patent:
**24.04.2019 Bulletin 2019/17**

(21) Application number: **14757184.8**

(22) Date of filing: **28.02.2014**

(51) Int Cl.:
***B29D 7/00*** (2006.01) ***B29C 41/24*** (2006.01)
***B29C 59/00*** (2006.01) ***B29C 70/64*** (2006.01)
***B05D 5/00*** (2006.01) ***B05D 1/30*** (2006.01)
***C08J 9/26*** (2006.01) ***C09D 133/26*** (2006.01)
*C08K 3/22* (2006.01)

(86) International application number:
**PCT/JP2014/055076**

(87) International publication number:
**WO 2014/133135 (04.09.2014 Gazette 2014/36)**

(54) **MANUFACTURING METHOD FOR UNEVEN STRUCTURE BODY**

HERSTELLUNGSVERFAHREN FÜR KÖRPER MIT UNEBENER STRUKTUR

PROCÉDÉ DE FABRICATION D'UN CORPS À STRUCTURE IRRÉGULIÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.03.2013 JP 2013041086**
**28.11.2013 JP 2013246702**

(43) Date of publication of application:
**06.01.2016 Bulletin 2016/01**

(73) Proprietor: **Fujifilm Corporation**
**Minato-ku**
**Tokyo 106-8620 (JP)**

(72) Inventors:
- **ITO Koju**
**Ashigarakami-gun**
**Kanagawa 258-8577 (JP)**
- **YABU Hiroshi**
**Sendai-shi**
**Miyagi 980-8577 (JP)**
- **SAITO Yuta**
**Sendai-shi**
**Miyagi 980-8577 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 963 079** **WO-A1-2009/041376**
**WO-A1-2011/010582** **JP-A- H05 117 591**
**JP-A- 2008 069 092** **JP-A- 2011 121 051**
**JP-A- 2012 111 694** **JP-A- 2012 157 653**
**US-A1- 2011 117 324**

- **YUTA SAITO ET AL: "Catechol-ki Gan'yu Ryo-Shinbaisei Kobunshi ni yoru Hyomen Shushoku Titania Nano Ryushi o Mochiita Kaisoteki Takoshitsu Maku no Sakusei", SYMPOSIUM ON MACROMOLECULES YOKOSHU,, vol. 61, no. 2, 5 September 2012 (2012-09-05), pages 4657-4658, XP008181031,**
- **YUTA SAITO ET AL: "Fabrication of Mussel-Inspired Highly Adhesive Honeycomb Films Containing Catechol Groups and Their Applications for Substrate-Independent Porous Templates", MACROMOLECULAR RAPID COMMUNICATIONS, vol. 34, no. 8, 19 March 2013 (2013-03-19) , pages 630-634, XP055298540, DE ISSN: 1022-1336, DOI: 10.1002/marc.201200839**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 963 082 B1

- YUTA SAITO ET AL: "Dispersion of Al2O3 nanoparticles stabilized with mussel-inspired amphiphilic copolymers in organic solvents and formation of hierarchical porous films by the breath figure technique", CHEMICAL COMMUNICATIONS - CHEMCOM., vol. 49, no. 54, 15 May 2013 (2013-05-15), page 6081, XP055298568, ISSN: 1359-7345, DOI: 10.1039/c3cc42826e -& Yuta Saito ET AL: "Supporting Information Dispersion of Al2O3 Nanoparticles with Mussel-Inspired Amphiphilic Copolymers in Organic Solvents and Formation of Hierarchic Porous Films by the Breath Figure Technique", , 15 May 2013 (2013-05-15), XP055298575, Retrieved from the Internet: URL:http://www.rsc.org/suppdata/cc/c3/c3cc42826e/c3cc42826e.pdf [retrieved on 2016-08-30]
- YUTA SAITO ET AL.: 'Catechol-ki Gan'yu Ryo-Shinbaisei Kobunshi ni yoru Hyomen Shushoku Titania Nano Ryushi o Mochiita Kaisoteki Takoshitsu Maku no Sakusei' SYMPOSIUM ON MACROMOLECULES YOKOSHU vol. 61, no. 2, 05 September 2012, pages 4657 - 4658, XP008181031
- EIJI WATANABE: 'Igai na Banno Hyomen Shushokuho' DOJIN NEWS 2007, page 12, XP008181033

## Description

### TECHNICAL FIELD

The present invention relates to a method of producing a protrusion/recess structure having protrusions or recesses on a surface.

### BACKGROUND ART

A protrusion/recess structure having fine protrusions/recesses on a surface is a target of expectation for use not only in a field of optical materials and electronic materials but in wide fields, such as a regeneration medicine. Among examples of the protrusion/recess structure, there is an example in which protrusions/recesses are formed in a regular pattern. Among examples of the regular pattern, there is film of a honeycomb structure (hereinafter referred to as honeycomb structure film) in which plural pores are formed on a film surface at a constant pitch.

A condensation method is known as a method of producing the honeycomb structure film of polymer. The condensation method is to cast polymer solution for forming polymer film, create cast film, and condense water on the cast film in the atmosphere for forming water droplets. A solvent component in the polymer solution and water droplets are evaporated, to produce the polymer film having the plural pores described above. It is possible in the condensation method to form the pores of a very small constant size in a regular arrangement.

However, raw materials for the honeycomb structure film of polymer producible by the condensation method are limited, due to the utilization of a phenomenon of dew condensation. Thus, use of the honeycomb structure film produced by the condensation method is limited. Patent Document 1, for example, suggests the honeycomb structure film constituted by fine particles of inorganic material as the honeycomb structure film. In Patent Document 1, resistance to solvent is improved to enhance the use of the honeycomb structure film. As the honeycomb structure film disclosed in JP2011-121051A is produced by the condensation method, it is possible according to specific features of the condensation method to form the pores with uniformity and in regular arrangement. Yuta Saito et al, Symposium on Macromolecules Yokoshu, 2012, Vol. 61, No. 2, pages 4657-4658 discloses the preparation of a solution of a chatechol-containing polymer and hydrophobic particles in $CHCl_3$ which is subjected to homogenization, followed by the addition of acetone and washing. The solvent is replaced with benzene and the solution is casted on a substrate under humid conditions to form a film.

Further, WO 2009/041376 describes the casting of a solution of a polymer compound and an amphiphilic compound dissolved in a solvent to form a cast film. The solvent is evaporated, whereby water droplets are formed on a surface of the cast film. Accordingly, a porous film with uniform pores is produced.

### SUMMARY OF INVENTION

#### Problems to Be Solved by The Invention

However, there is a problem in the honeycomb structure film disclosed in Patent Document 1 in that the protrusion/recess structure having been formed regularly may be deformed, or that fine particles may drop.

An object of the present invention is to provide method of producing a protrusion/recess structure which is formed from fine particles, which will not be deformed easily, and in which the fine particles will not drop easily.

#### Means for Solving the Problems

A producing method of producing a protrusion/recess structure having protrusions or recesses formed on a surface in the present invention includes a film forming step, droplet forming step and an evaporating step. In the film forming step, solution of a dissolved amphipathic high molecular compound having a catechol group is cast on a support to form cast film. The solution contains hydrophobic organic solvent and plural hydrophobic fine particles dispersed in the organic solvent. Then water droplets are formed by condensation on the cast film, followed by evaporating the organic solvent from the cast film until the fluidity of the fine particles becomes lost. This occurs when a liquid content (ZB) of the organic solvent in the cast film becomes ≤ 50 wt.%, wherein the liquid content (ZB) of the organic solvent in the cast film is defined by (M1/M2) .100 with M1 being a mass of a dispersant contained in the cast film and M2 being a mass of the fine particles contained in the cast film. Then the water droplets are evaporated from the cast film, to form the protrusion/recess structure of a film form.

Preferably, the protrusion/recess structure is film in a honeycomb structure after forming the plural recesses in a constant size and in arrangement on one film surface, or is film after forming plural protrusions at a constant height and shape and in arrangement on one film surface.

Preferably, a diameter of the fine particles is equal to or more than 1 nm and equal to or less than 10 μm. Preferably, the fine particles are formed from inorganic material or organic material. Preferably, the inorganic material is one of precious metal, transition metal, metal oxide and semiconductor. Preferably, the organic material is one of fluoropolymer and polymer having a crosslinked structure.

Effect of the Invention

According to the producing method for a protrusion/recess structure of the present invention, it is possible to produce the protrusion/recess structure which is formed from fine particles, which will not be deformed easily, and in which the fine particles will not drop easily.

BRIEF DESCRIPTION OF DRAWINGS

Fig. 1 is a plan schematically illustrating a protrusion/recess structure in an embodiment of the present disclosure;
Fig. 2 is a section taken on line II-II in Fig. 1;
Fig. 3 is a plan of enlargement of a portion surrounded by line III in Fig. 1;
Fig. 4 is a section schematically illustrating a portion surrounded by line IV in Fig. 2;
Fig. 5 is a section schematically illustrating an adhesion state between fine particles in a first coating condition;
Fig. 6 is an NMR absorption spectrum chart of APOS expressed in a formula (3);
Fig. 7 is an NMR absorption spectrum chart of a catechol group-containing compound;
Fig. 8 is an NMR absorption spectrum chart of a catechol group-containing compound;
Fig. 9 is a flow chart illustrating a production flow for a protrusion/recess structure;
Fig. 10 is a view schematically illustrating a producing system for the protrusion/recess structure;
Fig. 11 is an explanatory view of a drop forming step;
Fig. 12 is an explanatory view of the drop forming step;
Fig. 13 is a section schematically illustrating an adhesion state between fine particles in a second coating condition;
Fig. 14 is a section schematically illustrating a protrusion/recess structure;
Fig. 15 is a section schematically illustrating a protrusion/recess structure;
Fig. 16 is a section schematically illustrating a protrusion/recess structure;
Fig. 17 is a plan schematically illustrating a protrusion/recess structure;
Fig. 18 is a plan schematically illustrating a protrusion/recess structure;
Fig. 19 is a section taken on line XIX-XIX in Fig. 18;
Fig. 20 is a section taken on line XX-XX in Fig. 18;
Fig. 21 is an explanatory view of a synthesis method for the catechol group-containing compound;
Fig. 22 is a SEM (scanning electron microscope, hereinafter referred to as SEM) photograph of a film surface of a pore side of the protrusion/recess structure;
Fig. 23 is a SEM photograph of a section of a protrusion/recess structure;
Fig. 24 is a SEM photograph of a trunk of a protrusion/recess structure;
Fig. 25 is a SEM photograph of voids between fine particles in the protrusion/recess structure;
Fig. 26 is a SEM photograph of a protrusion/recess structure;
Fig. 27 is a SEM photograph of a protrusion/recess structure;
Fig. 28 is a SEM photograph of a protrusion/recess structure;
Fig. 29 is a SEM photograph of a protrusion/recess structure;
Fig. 30 is a SEM photograph of a protrusion/recess structure;
Fig. 31 is a SEM photograph of a protrusion/recess structure;
Fig. 32 is a SEM photograph of a protrusion/recess structure;
Fig. 33 is a SEM photograph of a protrusion/recess structure.

MODE FOR CARRYING OUT THE INVENTION

A protrusion/recess structure 10 as one example of the present disclosure, as illustrated in Figs. 1 and 2, is in a film shape, and has plural pores 12 formed to open in one film surface. Each of the pores 12 is open in the film surface to constitute a recess in the protrusion/recess structure 10. Protrusions lie between the recesses. The pores 12 have a predetermined size and are arranged tightly. Thus, the protrusion/recess structure 10 is a structure like a bee hive, or so-called honeycomb structure.

Note that, in this specification, the honeycomb structure means a structure in which the pores having a specific

shape and size are arranged on a film surface regularly and consecutively as described above. In the honeycomb structure, basically, arbitrary one pore is surrounded by plural (for example, 6) pores on the same plane along the film surface. The number of pores formed around the arbitrary one pore is not limited to six, and may be three to five, or seven or more.

A size and formation density of the pores 12 vary depending on production conditions to be described later. Note that the formation density is the number of the pores 12 per unit area on the film surface. Although the form of the protrusion/recess structure 10 is not especially limited, a thickness TH1 of the protrusion/recess structure 10 shown in Fig. 2 is preferably in the range equal to or more than 0.05 μm and equal to or less than 10 μm, more preferably in the range equal to or more than 0.05 μm and equal to or less than 5 μm, and most preferably in the range equal to or more than 0.1 μm and equal to or less than 3 μm. Further, a diameter D1 of the pores 12 is preferably in the range equal to or more than 0.05 μm and equal to or less than 3 μm, more preferably in the range equal to or more than 0.1 μm and equal to or less than 2 μm, and most preferably in the range equal to or more than 0.1 μm and equal to or less than 1 μm. A pitch P1 of forming the pores 12 is preferably in the range equal to or more than 0.1 μm and equal to or less than 10 μm, more preferably in the range equal to or more than 0.1 μm and equal to or less than 5 μm, and most preferably in the range equal to or more than 0.1 μm and equal to or less than 3 μm.

Let De1 be a depth from a film surface 10a as tops of protrusions (summits) to a base portion 12a of the pores 12. A value of De1/D1 is preferably in the range equal to or more than 0.05 and equal to or less than 1.2, and more preferably in the range equal to or more than 0.2 and equal to or less than 1.0.

As illustrated in Figs. 3 and 4, the protrusion/recess structure 10 is collection of fine particles 14. Each of the fine particles 14 is spherical. Thus, fine voids 11 are formed within the protrusion/recess structure 10. In Figs. 3 and 4, the protrusion/recess structure 10 is schematically depicted. The diameter D1 of the pores 12 is larger than the diameter D2 of the fine particles 14. The voids 11 between the fine particles 14 are remarkably small in comparison with the diameter D1 of the pores 12. Thus, the protrusion/recess structure 10 has first voids formed in the film surface as the pores 12, and small second voids 11 formed between the fine particles 14 and remarkably smaller than the first voids. Assuming that a value of D1/D2 is in a range equal to or more than 5 and equal to or less than 50, 000, effects of the invention can be obtained. Assuming that the value of D1/D2 is in a range equal to or more than 10 and equal to or less than 10,000, further conspicuous effects of the invention can be obtained. Assuming that a value of the diameter D2 of the fine particles 14 is in a range equal to or more than 1 nm and equal to or less than 10 μm, effects of the invention can be obtained. A range equal to or more than 5 nm and equal to or less than 0.5 μm is more preferable. Assuming that the value of the diameter D2 is in a range equal to or more than 10 nm and equal to or less than 0.1 μm, further conspicuous effects of the invention can be obtained.

The fine particles 14 constituting the surface where the pores 12 are formed are arranged in a manner on a curved surface. As illustrated in Fig. 4, for example, the fine particles 14 are arranged on a spherical surface on the surface with the pores 12. It is likely that the fine particles 14 on the curved surface are arranged with predetermined regularity. As illustrated in Fig. 4, for example, the fine particles 14 arranged at the pores 12 in the protrusion/recess structure 10 constitute a first regular sequence 14a in which the fine particles 14 are arranged alternately. Additionally, a portion deeper than the base portion 12a of the pores 12 (see Fig. 2) in the thickness direction of the protrusion/recess structure 10 may be also constituted by a second regular sequence 14b in which the fine particles 14 are arranged with certain regularity in some cases. For example, in the second regular sequence 14b, as illustrated in Fig. 4, the plurality of the fine particles 14 are arranged in a matrix manner. As described above, the regularity of the arrangement of the fine particles 14 in the first regular sequence 14a for forming the surface, and the regularity of the arrangement of the fine particles 14 in the second regular sequence 14b located in the deeper portion are not always equal to each other.

Further, in certain cases, there are an irregular sequence 14c, in which the fine particles 14 are arranged without regularity, between the first regular sequence 14a for forming the surface having the pores 12 and the second regular sequence 14a located in a deeper portion. The protrusion/recess structure 10 is in this state as illustrated in Fig. 4. Note that it is likely that the irregular sequence 14c is not formed in a certain structure which is not shown. The arrangement of the fine particles 14 in the first and second regular sequences 14a and 14b is the same as an arrangement of atoms in a body-centered cubic structure, a face-centered cubic structure, a hexagonal close-packed structure, or other crystal structures. The arrangement of the fine particles 14 in the irregular sequence 14c corresponds to an arrangement of atoms in a grain boundary.

The fine particles 14 are formed from hydrophobic material. As illustrated in Fig. 5, a surface of each of the fine particles 14 is at least partially provided with an amphipathic high molecular compound 15 having a catechol group (hereinafter referred to as catechol group-containing compound). Thus, the surface of each of the fine particles 14 is at least partially coated with the catechol group-containing compound 15. The fine particles 14 in this first coating condition are attached to one another by the catechol group-containing compound 15. In Fig. 5, hatching at the catechol group-containing compound 15 is omitted to avoid complication in the drawing.

In the present embodiment, the fine particles 14 are constituted by inorganic material. Examples of the inorganic material include titanium dioxide (titania, $TiO_2$), silicon dioxide (silica, $SiO_2$), hydroxyapatite (HyAp), zinc oxide (ZnO)

and aluminum oxide (alumina, $Al_2O_3$). However, the inorganic material is not limited thereto, but can be one of precious metals, transition metals, metal oxides and semiconductors. Examples of the precious metals include gold, palladium, platinum, silver and indium. Examples of the transition metals include Cu, Fe, Co, Cr, Zn and Ti. Examples of the metal oxides include iron oxide, titanium oxide, silicon oxide, aluminum oxide and zinc oxide. Examples of the semiconductors include Si, GaAs, InP and $Si_3N_4$. It is possible to combine and use the fine particles 14 of one example selected from those and the fine particles 14 of a second selected example.

The fine particles 14 can be particles constituted from organic materials insoluble in hydrophobic organic solvent as dispersant in place of the inorganic material. Examples of the organic materials are fluoropolymers and polymers with crosslinked structures. Fluoropolymers are polymer after polymerizing a hydrocarbon monomer in which at least one hydrogen has become fluorine among hydrocarbon monomers bound in a chain form, mesh form, ring form or tree form. Examples of the fluoropolymers are polytetrafluoroethylene (PTFE) and tetrafluoroethylene perfluoroalkyl vinyl ether copolymer (PFA) . Examples of the polymers having the crosslinked structure are crosslinkable PTFE, and compounds obtained by photocrosslinking photocrosslinkable material.

The photocrosslinkable materials are capable of crosslinking (hardening) upon applying ultraviolet rays and visible light. Examples for use are materials of which main components are (meth)acrylate oligomers, (meth)acrylate monomers, or mixtures thereof, or oligomers thereof, monomers, and a photo polymerization initiator (a) of a sufficient amount for polymerizing and hardening mixtures of those, and materials of which main components are epoxy group-containing compounds, vinyl compounds, oxetane ring-containing compounds, alicyclic epoxy compounds, or mixtures of those, and a photo polymerization initiator (b) of a sufficient amount for polymerizing and hardening those compounds or mixtures of those. Also, examples for use are materials of which main components are half ester compounds, (meth)acrylate monomers, epoxy group-containing compounds, vinyl compounds, oxetane ring-containing compounds, alicyclic epoxy compounds, or mixtures of those, and the photo polymerization initiator (a) and the photo polymerization initiator (b) of a sufficient amount for polymerizing and hardening those compounds or monomers or mixtures of those.

The catechol group-containing compound 15 is obtained by polymerization of first and second compounds different from one another. The first compound is a substance containing a catechol group capable of producing a first homopolymer of a series of plural first repeating units with a catechol group by polymerization. It is possible to protect -OH in the catechol group with a protecting group. For this structure, deprotection is performed after the polymerization with the second compound, to obtain the catechol group-containing compound 15. An example of the protecting group is a silyl protecting group.

An example of the first compound is one containing a catechol group and having a carbon-carbon double bond in a portion other than the catechol group. A carbon-carbon single bond is produced with another molecule of the first compound by contribution of the carbon-carbon double bond. A first repeating unit is obtained from a single bond from a portion of the carbon-carbon double bond contributing to the polymerization. The above-described first homopolymer is obtained by the carbon-carbon single bond produced by the polymerization.

In contrast, the second compound is a substance from which a second homopolymer in a series of second repeating units is producible by polymerization, and does not have a catechol group. The second homopolymer has a hydrophobic portion. The second homopolymer may be amphipathic, having a hydrophilic portion in addition to the hydrophobic portion. Examples of structures of the second homopolymer having the hydrophobic and hydrophilic portions include a structure having a main chain as a hydrophobic portion and a hydrophilic group as a hydrophilic portion, and a structure having a hydrophilic group as a hydrophilic portion at an end of a main chain as a hydrophobic portion.

An example of the second compound is a compound having a carbon-carbon double bond. Homopolymerization of the second compound forms a carbon-carbon single bond with another molecule of the second compound by contribution of the carbon-carbon double bond to the polymerization. A second repeating unit is obtained by forming a single bond from a portion of the carbon-carbon double bond contributing to the polymerization. The second homopolymer described above is obtained by the carbon-carbon single bond formed by the polymerization.

The catechol group-containing compound 15 is produced by polymerization of the first and second compounds described above. The catechol group-containing compound 15 has a catechol group-containing portion of a series of a plurality of the first repeating units, and a catechol group-free portion of a series of a plurality of the second repeating units and not having a catechol group. The catechol group-containing compound 15 attaches the fine particles 14 to one another by adhesion with the catechol group-containing portion.

Let n be a number of the first repeating units constituting the catechol group-containing portion in the catechol group-containing compound 15. Let m be a number of the second repeating units constituting the amphipathic structure. A ratio n/(m+n) is preferably in a range equal to or more than 0.01 and equal to or less than 0.8, and more preferably in a range equal to or more than 0.1 and equal to or less than 0.5.

Examples of the first compound are e.g. dopamine methacrylamide (DMA) and ((4-allyl-1,2-phenylene) bis(oxy)) bis(triethylsilane) (APOS). The APOS has a structure in which -OH in the catechol group is protected by a silyl protecting group $-Si(C_2H_5)_3$, to be described later.

The first compound of the present embodiment is DMA expressed in the formula (1) below (molecular weight

of approximately 207.2). Note that polymerization of DMA obtains a first homopolymer having a first repeating unit expressed in the formula (2) below.

[Chemical 1]

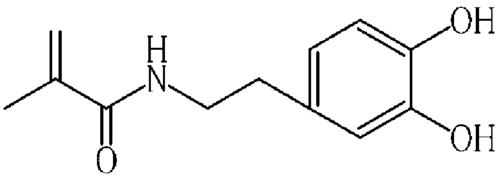

...formula (1)

[Chemical 2]

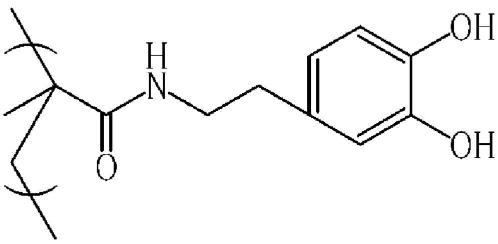

...formula (2)

DMA expressed in the formula (1) is a compound containing a catechol group, hydrocarbon chain with a carbon atomicity of 2, portion of an amide bond, portion of a carbon-carbon double bond and methyl group, in a series from a right side of the formula (1). The hydrocarbon chain has hydrophobicity. The portion of the amide bond has hydrophilicity. The carbon-carbon double bond is changed to a single bond by the polymerization, to form a carbon-carbon single bond together with another molecule of DMA or a molecule of the second compound. A portion of the carbon chain of the formed single bond, namely -(CH-$CH_2$)-, has hydrophobicity. The methyl group has hydrophobicity. The repeating unit of the formula (2) is a structure in which only the portion of the carbon-carbon double bond contributing to the polymerization of DMA becomes a single bond.

APOS is synthesized, for example, by the following method. 6.37 g of triethylsilane ($C_6H_{16}Si$) is added to 3 g of eugenol ($C_{10}H_{12}O_2$) in the presence of nitrogen, and is stirred adequately. 48.6 mg of tris(pentafluorophenyl)borane ($C_{18}BF_{15}$) is added to this solution, and is caused to react. After the reaction, column chromatography of the solution is performed by use of activated alumina (neutral) as a filler and chloroform as an effluent, so as to separate a reactant. The reactant is checked by thin layer chromatography of alumina. The effluent containing the reactant is removed by a rotary evaporator, so as to obtain liquid of APOS expressed in the formula (3) below. An NMR absorption spectrum chart of APOS is illustrated in Fig. 6, with which its structure can be confirmed.

[Chemical 3]

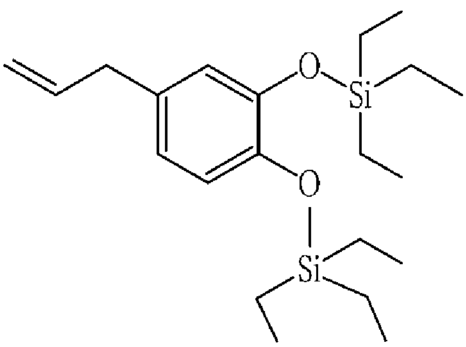

...formula (3)

The second compound in the present embodiment is N-dodecyl acrylamide (DAA) expressed in the formula (4) below (molecular weight of approximately 239.4). Polymerization of DAA produces a second homopolymer having a second repeating unit expressed in the formula (5) below.

[Chemical 4]

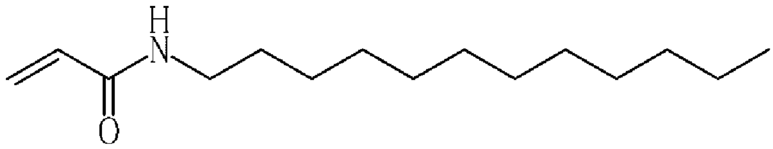

...formula (4)

[Chemical 5]

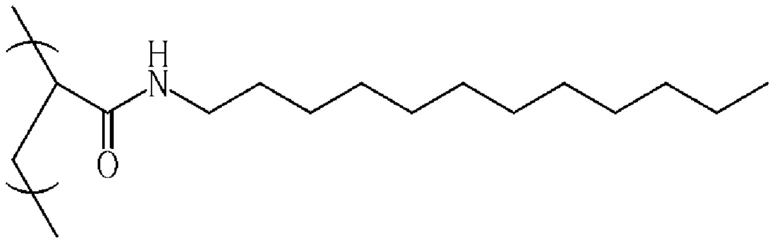

...formula (5)

DAA is a compound containing a hydrocarbon chain with a carbon atomicity of 12, portion of an amide bond, and portion of a carbon-carbon double bond, in a series from a right side of the formula (4). The hydrocarbon chain has hydrophobicity. The portion of the amide bond has hydrophilicity. Therefore, DAA has amphipathicity. The carbon-carbon double bond is changed to a single bond by the polymerization, to form a carbon-carbon single bond together with another molecule of DAA or a molecule of the first compound. A portion of the carbon chain of the formed single bond, namely $-(CH_2-CH_2)-$, has hydrophobicity. In the repeating unit of the formula (5), only the portion of the carbon-carbon double bond contributing to the polymerization of DAA is a single bond.

The catechol group-containing compound 15 obtained from DMA and DAA is polymer having a catechol group-containing portion of a series of plural repeating units of the formula (2) and a catechol group-free portion of a series of plural repeating units of the formula (5). In short, the catechol group-containing compound 15 is poly(dopamine methacrylamide-co-N-dodecyl acrylamide (abbreviated as P(DMA-co-DAA)) expressed by the formula (6) below. n and m in the formula (6) correspond to the number n of the first repeating units constituting the above-described catechol group-containing portion and the number m of the second repeating units constituting the amphipathic structure. m:n in the present embodiment is 8:1. A molecular weight (Mw) of the catechol group-containing compound 15 is preferably in a range equal to or more than 10, 000 and equal to or less than 1,000,000. In the present embodiment, Mw (weight average molecular weight) is 12,000, and Mw/Mn is 2.52, as obtained by gel permeation chromatography (GPC) and according to polystyrene conversion. Mn is a number average molecular weight.

[Chemical 6]

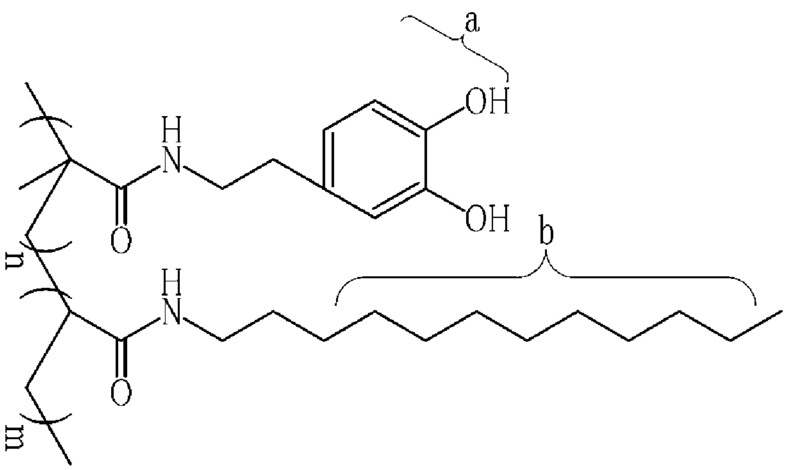

...formula (6)

The catechol group-containing compound 15 expressed by the formula (6) can be obtained by dissolving DMA and DAA in solvent together with a radical initiator, and by performing radical polymerization. Before the polymerization, a molar ratio between DMA and DAA and an amount of the polymerization initiator are determined. The compounds are dissolved in solvent, and then polymerized at temperature equal to or higher than scission temperature of the polymerization initiator. Note that the solvent has a boiling point higher than the scission temperature of the polymerization initiator. Also, the catechol group-containing compound 15 is structurally checked by NMR measurement. For example, an NMR absorption spectrum chart of the catechol group-containing compound 15 in which m:n = 5.5:1 in the formula (6) is as illustrated in Fig. 7, in which the structure can be checked. The absorption spectrum charts of Figs . 6, 7 and 8 are obtained by use of Bruker, type AVANCE (trademark) III 500 type.

According to the NMR absorption spectrum chart of Fig. 7, no peak of a double bond of DMA and DAA as monomers is observed. Peaks expressing structures denoted by signs a and b in the formula (6) are observed.

Preferable examples of the polymerization initiator in the radical polymerization of DMA and DAA are azoisobutyronitrile (2,2'-azo bis(2-methyl propionitrile), abbreviated as AIBN, $C_8H_{12}N_4$, molecular weight of approximately 160), and benzoyl peroxide (BPO). Specifically, AIBN is preferable among those, and used in the present embodiment.

[Chemical 7]

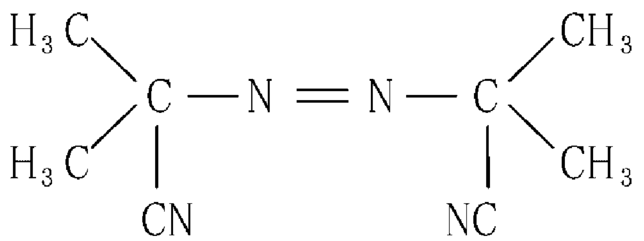

...formula (7)

A preferable solvent in the radical polymerization of DMA and DAA is a mixed solvent of dimethyl sulfoxide (abbreviated as DMSO, $(CH_3)_2SO$, molecular weight of approximately 78.1) and benzene. This mixed solvent is used in the present embodiment.

Also, in the use of APOS as the first compound, copolymerization with DAA is possible in a manner similar to DMA. The catechol group-containing compound 15 is produced by the deprotection. APOS is deprotected by use of tetrabutylammonium fluoride ($C_{16}H_{36}NF$) after copolymerization with DAA, to prepare the catechol group-containing portion. In the deprotection, a catechol group-containing macromolecule is dissolved in DMF (N,N-dimethyl formamide) . Tetraethyl fluoroamine of moles equal to a content of the catechol group-containing portion in the catechol group-containing macromolecule is added. The solution is stirred for 10 minutes. Then the precipitation is performed again. Thus, the catechol group-containing compound 15 being deprotected is obtained. The catechol group-containing compound 15 has a structure in which H substitutes for two groups of $-Si(C_2H_5)_3$ in the structure of the formula (8) below.

[Chemical 8]

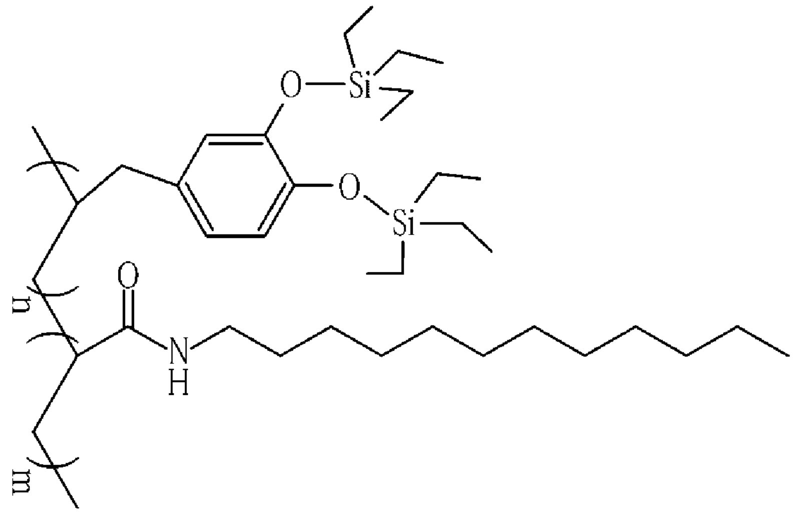

...formula (8)

It is preferable that m:n in the formula (8) is in a range from 5:5 to 9:1. In the present embodiment, this range is used. The proportion between m and n corresponds to a ratio of preparation between the second compound (DAA) and the first compound (APOS). For example, the number of moles of DAA : the number of moles of APOS = 6:4 is satisfied to set m:n approximately equal to 6:4. An NMR absorption spectrum chart of the compound of the formula (8) is in Fig. 8, with which the structure is confirmed.

Furthermore, the catechol group-containing compound 15 can be produced by use of a third compound distinct from the first or second compound in addition to the first and second compounds. In short, the catechol group-containing compound 15 may be polymer of the first, second and third compounds. Note that the third compound is used in a range not lowering the adhesive property between the fine particles 14 according to the catechol group.

The protrusion/recess structure 10, for example, is produced by a production flow 20 illustrated in Fig. 9. The production flow 20 includes hydrophobic liquid preparing steps 21, a film forming step 22, a droplet forming step 25 and evaporating steps 26. The hydrophobic liquid preparing steps 21 prepare hydrophobic liquid 27 for forming the protrusion/recess structure 10. The hydrophobic liquid preparing steps 21, for example, include a dispersion step 31, a dissolution step 32, a homogenizing step 33, a hydrophilizing step 34 and a hydrophobizing step 35.

In the dispersion step 31, the fine particles 14 are added to organic solvent 37 to prepare dispersion liquid 38, the organic solvent 37 being used for dissolving the catechol group-containing compound 15 and dispersing the fine particles 14. The dissolution step 32 dissolves the catechol group-containing compound 15 in the organic solvent 37 to prepare first solution 39. In the homogenizing step 33, the first solution 39 is added to the dispersion liquid 38 and stirred to disperse the fine particles 14 to the entirety of the solution, to obtain a state dispersed as homogeneously as possible. Also, the homogenizing step 33 can include ultrasonic processing after the stirring for the purpose of increasing the degree of the dispersed state of the fine particles 14. Thus, second solution 42 is obtained, in which the fine particles 14 are dispersed and the catechol group-containing compound 15 is dissolved.

The hydrophilizing step 34 is a step for increasing hydrophilicity of the second solution 42. For example, the hydrophilizing step 34 adds liquid with higher hydrophilicity than the organic solvent 37 to the second solution 42, to increase the hydrophilicity of the second solution 42. Owing to the hydrophilizing step 34, the catechol group-containing compound 15 contained in the second solution 42 is condensed on an interface between the fine particles 14 and the liquid component.

The hydrophobizing step 35 is a step of lowering hydrophilicity of the second solution 42 to obtain the hydrophobic liquid 27 for supply to the film forming step 22. Namely, the hydrophobizing step 35 lowers the hydrophilicity of the second solution 42 after increasing the hydrophilicity once in the hydrophilizing step 34, so as to change the second solution 42 to the hydrophobic liquid 27 with higher hydrophobicity. For example, organic solvent 43 is substituted by the hydrophobizing step 35 for a solvent component contained in the second solution 42, namely the organic solvent 37 and the liquid having been used for encouraging hydrophilization in the hydrophilizing step 34, the organic solvent 43 having higher hydrophobicity than those.

As the organic solvent 43, an example having a lower boiling point than the solvent component contained in the second solution 42 is more preferable. Obtaining the hydrophobic liquid 27 having the solvent component with the lower boiling point shortens required time in the evaporating steps 26 of a subsequent stage. Examples of the organic

solvent 43 are benzene, chloroform, dichloromethane, normal hexane and cyclohexane. For example, benzene is preferable as the organic solvent 43 in a condition of the catechol group-containing compound 15 being the compound expressed in the formula (6).

The film forming step 22 casts the hydrophobic liquid 27 on a support to form cast film 44. On the cast film 44, the droplet forming step 25 condenses moist contained in the atmosphere around the cast film 44, to form water droplets. The water droplets function as a so-called template (pattern) for the purpose of forming the pores 12 (see Fig. 1). The evaporating steps 26 include an organic solvent evaporating step 47 and a droplet evaporating step 48. The organic solvent evaporating step 47 evaporates the organic solvent 43 from the cast film 44 after performing the droplet forming step 25. The droplet evaporating step 48 evaporates water droplets from the cast film 44 after performing the organic solvent evaporating step 47.

As illustrated in Fig. 10, a protrusion/recess structure producing system 50, for continuously performing steps including the film forming step 22 and subsequent steps in the production flow 20, includes e.g. a feeder 51, a film production apparatus 52 and a cutter 53. The feeder 51 draws an elongated support 56 from a roll in which the support 56 is wound, and feeds the support 56 to the film production apparatus 52. The support 56 for use is a support with flexibility, for example, support of stainless. Also, a feeder (not shown) in place of the feeder 51 can be a structure for feeding a support (not shown) of a plate shape or sheet shape in a state placed on a transport belt toward the film production apparatus 52. Examples of the support can be a plate material of glass or polymer, or sheet material.

The film production apparatus 52 is for producing the protrusion/recess structure 10 from the hydrophobic liquid 27. The film production apparatus 52 has a chamber 57 with an inner divided space. The chamber 57 is divided into a first chamber cell 57a, a second chamber cell 57b, a third chamber cell 57c and a fourth chamber cell 57d in series from an upstream side in a travel direction of the elongated support 56 of a long shape (hereinafter referred to as a direction X), the first chamber cell 57a being for the film forming step 22, the second chamber cell 57b being for the droplet forming step 25, the third chamber cell 57c being for the organic solvent evaporating step 47, the fourth chamber cell 57d being for the droplet evaporating step 48 in a successive manner.

In the first chamber cell 57a is disposed a casting die 58 for discharging the hydrophobic liquid 27 toward the support 56. Continuous flow of the hydrophobic liquid 27 to the support 56 in the course of transport casts the hydrophobic liquid 27, to form the cast film 44 on the support 56. In the second chamber cell 57b are disposed ejection exhaust units 61 for supplying moist gas 400 having water to the cast film 44. The moist gas 400 can be any one of air, nitrogen and rare gas after being humidified, and can be mixed gas of at least two of those. In the present embodiment, humidified air is used. In the third chamber cell 57c are disposed ejection exhaust units 62 for supplying dry gas 402 (hereinafter referred to as dried gas) to the cast film 44 for evaporating solvent. In the fourth chamber cell 57d are disposed ejection exhaust units 63 for supplying dry gas 404 (hereinafter referred to as dried gas) to the cast film 44 for evaporating water droplets. In each of the second chamber cell 57b to the fourth chamber cell 57d, two of the ejection exhaust units 61-63 are arranged in the direction X. However, the number of the ejection exhaust units 61-63 in respectively the chamber cells 57b-57d is not limited thereto, and for example, can be one or three or more according to a transport speed of the support 56.

The casting die 58 is so disposed as to direct its slit (not shown) for discharging the hydrophobic liquid 27 toward the support 56. The slit is an opening extending in a front-to-back direction as viewed on a drawing sheet of Fig. 10. A clearance between the slit and the support 56 is preferably in a range equal to or more than 0.01 mm and equal to or less than 10 mm. A temperature adjuster (not shown) is provided in the casting die 58, for adjusting temperature of the hydrophobic liquid 27 being supplied in a predetermined range, or adjusting temperature of elements in the casting die 58 such as a near portion of the slit, to prevent condensation of dew at the slit.

The ejection exhaust units 61 of the second chamber cell 57b include a duct 66 and a blowing device (not shown), the duct 66 having an ejection opening 66a and an exhaust opening 66b. The blowing device controls temperature, humidity and flow rate of the moist gas 400 ejected from the ejection opening 66a. Gas around the cast film 44 is sucked through the exhaust opening 66b.

The ejection exhaust units 62 and 63 in the third chamber cell 57c and the fourth chamber cell 57d have the same structure as the ejection exhaust units 61. The ejection exhaust units 62 include a duct 67 and blowing device (not shown), the duct 67 having an ejection opening 67a and an exhaust opening 67b. The ejection exhaust units 63 include a duct 68 and blowing device (not shown), the duct 68 having an ejection opening 68a and an exhaust opening 68b. Each blowing device controls temperature, humidity and flow rate of the dry gas 402 and 404 ejected from the ejection openings 67a and 68a. Gas around the cast film 44 is sucked through the exhaust openings 67b and 68b. The dry gas 402 and 404 can be any one of air, nitrogen and rare gas after being dehumidified, and can be mixed gas of at least two of those. In the present embodiment, dehumidified air is used.

Plural rollers 71 are disposed in a travel path of the support 56 in the film production apparatus 52. A temperature controller which is not shown controls the rollers 71 for the temperature in each of the chamber cells. A temperature control plate (not shown) is disposed between the rollers 71 respectively and near to the support 56 on a side opposite to the front surface where the cast film 44 is formed. The temperature control plate is for controlling temperature of the

support 56, to adjust the temperature of the cast film 44 by use of the support 56.

The cutter 53 cuts the protrusion/recess structure 10 of the long shape being obtained in a target size together with the support 56.

The operation of the above construction is described. The support 56 is continuously transported by the rollers 71. The support 56 passes from the first chamber cell 57a to the fourth chamber cell 57d successively at a predetermined speed, for example, at a speed in a range equal to or more than 0.001 m/min and equal to or less than 100 m/min. The temperature of the surface of the support 56 is maintained substantially at a constant level by the temperature control plate in a predetermined range (equal to or more than 0 deg. C. and equal to or less than 30 deg. C).

In the first chamber cell 57a, the cast film 44 is continuously formed on the support 56 in the course of transport. Note that, upon intermittent flow of the hydrophobic liquid 27 from the casting die 58, the cast film 44 of a sheet type is formed. The cast film 44 contains the fine particles 14 in a dispersed state.

The thickness TH0 of the cast film 44 is controlled by viscosity and flow rate of the hydrophobic liquid 27, clearance of the slit of the casting die 58 and transport speed of the support 56. The thickness TH0 is preferably in a range equal to or more than 10 μm and equal to or less than 400 μm, and is more preferably in a range equal to or more than 10 μm and equal to or less than 200 μm, and is specially preferably in a range equal to or more than 10 μm and equal to or less than 100 μm.

In the second chamber cell 57b, the ejection exhaust units 61 supply the cast film 44 with the moist gas 400. Contact of the moist gas 400 with the cast film 44 forms water droplets 408 on a surface of the cast film 44 by condensation as illustrated in Fig. 11. Further supply of the moist gas 400 to the cast film 44 grows the water droplets 408. As a result of exertion of e.g. capillary force with the water droplets 408, the water droplets 408 on the cast film 44 become arranged with high density as illustrated in Fig. 12. A supply amount of the moist gas 400 is adjusted to set the water droplets 408 being formed in a target size. An example of an adjusting method for the supply amount of the moist gas 400 on the condition of a constant transport speed of the support 56 can be a method of adjusting a length of a travel path of the support 56 in the second chamber cell 57b e.g. by changing a length of the second chamber cell 57b in a transport direction of the support 56, and a method of adjusting a flow rate of the moist gas 400 from each ejection exhaust unit. Those methods can be used in a combined manner. To change the length of the travel path of the support 56 in the second chamber cell 57b, the number of the ejection exhaust units 61 to be installed may be changed. Furthermore, a method of adjusting the supply amount of the moist gas 400 can be a method of adjusting a transport speed of the support 56. For this method, it is possible additionally to adjust a flow amount of the hydrophobic liquid 27 from the casting die 58 in the first chamber cell 57a, or adjust e.g. a supply condition of the dry gas 402 in the third chamber cell 57c and the dry gas 404 in the fourth chamber cell 57d.

A progress of forming and growth of the water droplets 408 is adjusted by use of a parameter $\Delta Tw_{400}$ (= $TD_{400}$ - TS) expressed by a condensation point $TD_{400}$ of the moist gas 400 and the temperature TS of a surface 44a of the cast film 44. The temperature TS is adjusted by use of temperature of the surface of the support 56 and temperature of the hydrophobic liquid 27. $\Delta Tw_{400}$ in the second chamber cell 57b is preferably equal to or higher than at least 0 deg. C. in view of occurrence of condensation. Also, $\Delta Tw_{400}$ is preferably equal to or higher than 0.5 deg. C. and equal to or lower than 30 deg. C., and more preferably equal to or higher than 1 deg. C. and equal to or lower than 25 deg. C., and specially preferably equal to or higher than 1 deg. C. and equal to or lower than 20 deg. C.

Also, a liquid component in the hydrophobic liquid 27 is made incompatible with water by the hydrophobizing step 35. Thus, plural water droplets with a constant shape and size can be formed on the cast film 44 more reliably.

In the third chamber cell 57c, the ejection exhaust units 62 supply the cast film 44 with the dry gas 402. Contact of the dry gas 402 with the cast film 44 evaporates a liquid component from the hydrophobic liquid 27 contained in the cast film 44. Fluidity of the hydrophobic liquid 27 constituting the cast film 44 is decreased by the evaporation. Aggregation between the fine particles 14 proceeds. The evaporation of the liquid component is performed until the fluidity of the hydrophobic liquid 27 is lost. Upon the loss in fluidity of the hydrophobic liquid 27, fluidity of the fine particles 14 is lost. Surfaces of the fine particles 14 become in a state of depositing the catechol group-containing compound 15, in short, the surfaces of the fine particles 14 become at least partially coated with the catechol group-containing compound 15. Note that "loss in the fluidity of the fine particles 14" means coming of each one of the fine particles 14 to be in a non-mobile state (immobilized state) irrespective of residue of a liquid component. Growth of the water droplets 408 is stopped by evaporating the liquid component in the hydrophobic liquid 27 until the loss of the fluidity of the fine particles 14, to obtain the cast film 44 containing the water droplets 408.

Also, for evaporating a liquid component in the hydrophobic liquid 27 from the cast film 44, a parameter ΔTsolv (= TA - TR) is adjusted in a predetermined range, the parameter ΔTsolv being determined by a condensation point TR of the dry gas 402 and atmosphere temperature TA of the vicinity of the cast film 44. The atmosphere temperature TA is adjusted according to temperature of the dry gas 402. The condensation point TR is adjusted by use of a dispersant collector. It is preferable that ΔTsolv is higher than 0 deg. C. Also, evaporation of a liquid component can be encouraged by heating the cast film 44. Heating the cast film 44 can be performed by heating the support 56. Note that it is preferable in the organic solvent evaporating step 47 to set a parameter $\Delta Tw_{402}$ (= $TD_{402}$ - TS) in a range equal to or higher than

0 deg. C. and equal to or lower than 10 deg. C. to prevent evaporation of the water droplets 408, the parameter $\Delta Tw_{402}$ being determined by a condensation point $TD_{402}$ of the dry gas 402 and the temperature TS of the surface 44a of the cast film 44.

For criteria to check whether the fluidity of the cast film 44 is so high as to prevent growth of the water droplets 408, it is possible to use e.g. viscosity, composition and liquid content ZB of the residual liquid of the cast film 44. Among those, the viscosity and the liquid content ZB of the residual liquid can be criteria preferably. Ranges of the viscosity and the liquid content ZB of the residual liquid as the criteria depend e.g. upon the composition of the hydrophobic liquid 27 for use, but the viscosity of the cast film 44, for example, is set equal to or more than 10 Pa.s until a size of the water droplets 408 becomes a target size, or the liquid content ZB of the residual liquid in the cast film 44 is set equal to or less than 500 wt.%.

The liquid content ZB of the residual liquid is a value of an amount of dispersant remaining in the cast film 44 expressed according to the dry content, and is specifically obtained from (M1/M2).100 where M1 is a mass of the dispersant contained in the cast film 44 and M2 is a mass of the fine particles 14 contained in the cast film 44. A method of measuring the liquid content ZB of the residual liquid is collection of e.g. a sampled film from the cast film 44 to be measured, measurement e.g. of weight x of the sampled film being collected and weight y of the sampled film after being dried, and calculation of { (x-y) /y} .100 by use of the measured weights x and y.

Upon supplying the cast film 44 with the dry gas 404 from the ejection exhaust units 63 in the fourth chamber cell 57d, the water droplets 408 evaporate from the cast film 44. The protrusion/recess structure 10 is obtained upon the evaporation of the water droplets 408.

In the present embodiment, the liquid component in the second solution 42 is caused by the hydrophobizing step 35 to become the organic solvent 43 having a lower boiling point. This shortens time required for the evaporating steps 26. The protrusion/recess structure 10 having the pores 12 with a more constant size and shape can be obtained.

According to the invention, the cast film 44 in which the fluidity of the fine particles 14 has been lost is subjected to the droplet evaporating step 48. Here, the "fluidity of the fine particles 14" is attributed to the fluidity of the liquid component contained in the cast film 44 and intermolecular force between the fine particles 14. The "loss of the fluidity of the fine particles 14" is attributed to a decrease in the content of the liquid component in the cast film 44. Note that, the "loss of the fluidity of the fine particles 14" occurs when the fluidity of the fine particles 14 is at a level capable of keeping the shape of the pores 12 in the cast film 44 after being subjected to the droplet evaporating step 48 despite remainder of the fluidity of the fine particles 14. The "fluidity of the fine particles 14" can be evaluated by using the liquid content ZB of the organic solvent as an indicator. The droplet evaporating step 48 is applied to the cast film 44 in which the liquid content ZB of the organic solvent is equal to or less than 50 wt.%, and preferably applied to the cast film 44 in which the liquid content ZB of the organic solvent is equal to or less than 30 wt.%.

Thus, the organic solvent evaporating step 47 is performed until fluidity of the fine particles 14 becomes lost. In the above example of the droplet evaporating step 48, for example, the organic solvent evaporating step 47 is performed until a liquid content ZB of the organic solvent in the cast film 44 becomes equal to or less than 50 wt.%, and preferably until the liquid content ZB of the organic solvent in the cast film 44 becomes equal to or less than 30 wt.%.

Thus, the fine particles 14 constituting the protrusion/recess structure 10 become difficult to move during the droplet evaporating step 48 or after the droplet evaporating step 48. The pores 12 formed by arrangement of the fine particles 14 can exist stably in the protrusion/recess structure 10. Also, a partial surface of each of the fine particles 14 is coated with the catechol group-containing compound 15. Thus, the fine particles 14 can be attached together more strongly by the catechol group-containing compound 15, to keep the fine particles 14 from dropping. The strong adhesion maintains the protrusion/recess structure as the adhesion makes it difficult to deform the pores 12. Even after e.g. the baking in the post-processing of the protrusion/recess structure 10, the fine particles 14 do not drop, and the protrusion/recess structure is maintained. Assuming that the fine particles 14 are inorganic for example, the protrusion/recess structure 10 can have solvent resistance in relation to various solvents such as water and organic solvent.

Even though the surface of the fine particles 14 is coated with the catechol group-containing compound 15, voids are formed respectively between the fine particles 14. Thus, high porosity can be ensured, to ensure a high relative surface area. Each of the voids is excessively smaller than the pores 12. Also, the hydrophobic liquid 27 is prepared by use of the hydrophilizing step 34. Thus, the coating of the catechol group-containing compound 15 on the surface of the fine particles 14 can be formed the more thinly. The voids are more reliably formed respectively between the fine particles 14.

In the above embodiment, the film forming step 22 is performed in the first chamber cell 57a, and the droplet forming step 25 is performed in the second chamber cell 57b respectively. However, the film forming step 22 and the droplet forming step 25 are not limited thereto. For example, the film forming step 22 and the droplet forming step 25 can be performed in one chamber cell. For example, the casting die 58 can be disposed in the first chamber cell 57a. The ejection exhaust units 61 can be disposed downstream of the casting die 58. The hydrophobic liquid 27 can be discharged in the first chamber cell 57a filled with the moist gas 400 by the ejection exhaust units 61.

Note that the protrusion/recess structure producing system 50 is a system for producing the protrusion/recess

structure 10 of a long shape by continuous casting, and for cutting the same in a predetermined size. However, a producing system for producing the protrusion/recess structure 10 is not limited to the protrusion/recess structure producing system 50. For example, for using a so-called batch production of producing the protrusion/recess structure 10 of a sheet shape in a predetermined number, a chamber (not shown) having the casting die 58, the first chamber cell 57a, the second chamber cell 57b, the third chamber cell 57c and the fourth chamber cell 57d are discretely arranged in place of the film production apparatus 52. Cast film is formed on a support disposed under the casting die 58. The support where the cast film is formed is guided successively into the first chamber cell 57a, the second chamber cell 57b, the third chamber cell 57c and the fourth chamber cell 57d to obtain the protrusion/recess structure 10 of the sheet shape.

In the above embodiment, a partial surface of the fine particles 14 is coated with the catechol group-containing compound 15. However, a coating condition is not limited thereto. For example, as illustrated in Fig. 13, a protrusion/recess structure 85 of a second embodiment is constituted by a plurality of coated fine particles 86. Each of the coated fine particles 86 is a spherical fine particle 14 of which an entire surface is coated with the catechol group-containing compound 15. The voids 11 exist between the coated fine particles 86 because the coated fine particles 86 of the second coating condition of the coated entire surface are spherical. The application of the coating of the catechol group-containing compound 15 to the entire surfaces of the fine particles 14 is effective in preventing drop of the fine particles 14 more reliably, and maintaining the protrusion/recess form in the protrusion/recess structure 85. Note that a plan and section of the protrusion/recess structure 85 are similar to the protrusion/recess structure 10 illustrated in Figs. 1-4. The plan and section are not indicated.

Note that the protrusion/recess structure of the present invention is not limited to the protrusion/recess structures 10 and 85 but includes respectively protrusion/recess structures as follows. In the same manner as the protrusion/recess structures 10 and 85, voids defined between the fine particles 14 in any one of the protrusion/recess structures below are remarkably small in comparison with the size of the recesses in the surface of the protrusion/recess structure. In short, each protrusion/recess structure includes first voids formed in the film surface as recesses, and second voids defined between the fine particles 14 and remarkably smaller than the first voids. For example, a protrusion/recess structure 90 illustrated in Fig. 14 has plural pores 91 formed more deeply than the pores 12 in the protrusion/recess structure 10. Therefore, the pores 91 in the protrusion/recess structure 90 are nearer to a spherical shape than the pores 12 in the protrusion/recess structure 10. Also, a protrusion/recess structure 95 illustrated in Fig. 15 has through pores 96 penetrating in a thickness direction. The through pores 96 are open in both film surfaces. The through pores 96 arranged on the film surfaces are discrete from one another.

In a protrusion/recess structure 100 illustrated in Fig. 16, pores 101 arranged on the film surface communicate with one another. A protrusion/recess structure 105 illustrated in Fig. 17 has pores 106 penetrating in the thickness direction. The pores 106 are open in both of the film surfaces. The pores 106 communicate with one another. Each plan of the protrusion/recess structures 90, 95, 100 and 105 is similar to Fig. 1, and is omitted in the depiction. As described heretofore, any one of the protrusion/recess structures 90, 95, 100 and 105 has the pores 91, 96, 101 or 106 formed in at least one of the film surfaces as recesses. The pores 91, 96, 101 and 106 are arranged at the constant pitch.

A protrusion/recess structure 120 of a film form, as illustrated in Figs. 18-20, is a so-called pillar structure film on which pillar shaped protrusions 121 are formed on one film surface. The protrusions 121 are in a substantially equal shape and size. The protrusions 121 are arranged regularly on the film surface at a constant pitch. The protrusion/recess structure of the present invention, therefore, is not limited to a honeycomb structure with formed pores, but can be one having protrusions/recesses of a predetermined pattern formed on the surface.

As illustrated in Fig. 18, a tip surface 121a of the protrusions 121 is shaped in a surrounded form with three arcuate curves which are convex internally while the protrusion/recess structure 120 is viewed in a direction perpendicular to the film surface. A distance L1 between the adjacent protrusions 121 is constant and in a range equal to or more than 50 nm and equal to or less than 50 μm. Recesses surrounded by the protrusions 121 are formed at a larger size than the distance L1, so that recesses are larger than the diameter of the fine particles 14 described above. The thickness TA is in a range equal to or more than 50 nm and equal to or less than 50 μm.

In the protrusion/recess structures 90, 95, 100, 105 and 120 described above, a coating condition of the fine particles 14 with the catechol group-containing compound is the same as the protrusion/recess structure 10 illustrated in Fig. 5 or the protrusion/recess structure 85 illustrated in Fig. 13. Any one of the protrusion/recess structures 90, 95, 100, 105 and 120 is constituted by a plurality of the fine particles 14 having a partial surface coated respectively with the catechol group-containing compound 15, or by a plurality of the coated fine particles 86 having the entire surface of the fine particles 14 coated respectively with the catechol group-containing compound 15. Consequently, no drop of the fine particles 14 occurs in any of the protrusion/recess structures 90, 95, 100, 105 and 120. Note that the protrusion/recess structures 85, 90, 95, 100, 105 and 120 are produced by the production flow 20 and the protrusion/recess structure producing system 50 for producing the protrusion/recess structure 10.

Furthermore, the protrusion/recess structure is not limited to the film shape of the above embodiment, but can be, for example, one in a block shape having the pores 12 or the protrusions 121 on the surface. To produce the

protrusion/recess structure of the block shape, the hydrophobic liquid 27 is poured in a mold according to intention. The hydrophobic liquid 27 stored in the mold is processed successively in the droplet forming step 25, the organic solvent evaporating step 47 and the droplet evaporating step 48, so as to obtain the protrusion/recess structure of the block shape.

The protrusion/recess structure produced according to the present invention can be used, for example, as an anti-reflection film, anti-fingerprint film, battery electrode material, filter as a material of a cell membrane or optical material, or a liquid-repellent film for use with a liquid ejection head of an ink jet.

EXAMPLE 1

The catechol group-containing compound 15 was synthesized. A method of synthesizing the catechol group-containing compound 15 is described now by referring to Fig. 21. At first, DMA as a first compound or raw material for the catechol group-containing compound 15 was produced by the following method. In ultrapure water produced by use of an ultrapure water producing apparatus (MILLI-Q (trademark)) manufactured by Millipore Corporation, $N_2$ was bubbled for 20 minutes. Sodium bicarbonate ($NaHCO_3$), borax ($Na_2B_4O_7$) and dopamine hydrochloride (abbreviated as DOPA, $C_8H_{11}NO_2$, molecular weight of approximately 153.2) were added to the ultrapure water. The solution was stirred, while tetrahydrofuran (THF) solution of dimethacrylic acid anhydride ($C_8H_{10}O_3$, molecular weight of approximately 154.2) expressed by the formula (10) was poured in the stirred solution. At this time, aqueous solution of sodium hydroxide (NaOH) was added to keep the hydrogen ion concentration index pH of the above-described solution equal to or more than 8. The solution was stirred for one night. For each of the steps, $N_2$ was bubbled in the processing. Then pH of the solution was adjusted at a level equal to or less than 2 by use of hydrochloric acid (HCl), before ethyl acetate was added, to extract the product. The solution was dried by sodium sulfate ($Na_2SO_4$), and then condensed and recrystallized by an evaporator. DMA was collected by decompression and filtration, and dried by vacuum drying, to obtain DMA.

[Chemical 9]

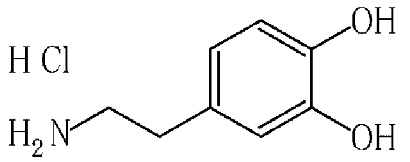

...formula (9)

[Chemical 10]

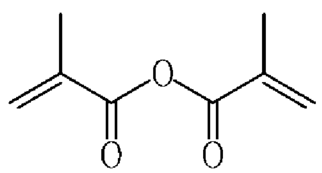

...formula (10)

The catechol group-containing compound 15 was synthesized from DMA as first compound and DAA as second compound to satisfy m:n = 8:1 in the formula (6) by use of the following method. DAA and AIBN were those refined by recrystallization before the polymerization. DAA was recrystallized by use of ethyl acetate. AIBN was recrystallized by use of methanol.

DMA, DAA and AIBN were dissolved in a mixed solvent obtained by mixing DMSO and benzene. A ratio in the amount of substance between DMA, DAA and AIBN was DMA:DAA:AIBN = 0.673:5.43:0.125. A ratio in the mass between DMSO and benzene in the mixed solvent was DMSO : benzene = 0.413:8.77. The solution was frozen and degassed for three times, before the solution was heated as high as 70 deg. C. in the atmosphere of nitrogen, and started being polymerized in free radical polymerization. After the polymerization for 6 hours, the solution of the reaction was poured in acetonitrile, and centrifuged to obtain white precipitation. The white precipitation was decompressed and dried, to obtain a solid matter of the catechol group-containing compound. The solid matter was dissolved in mixed solvent of acetone and refined water, and refined by filtration and precipitation, and obtained at a yield of 55 %.

Then the hydrophobic liquid 27 was prepared by the following method. The fine particles 14 for use were so-called nanoparticles (diameter of 25 nm or less) of $TiO_2$. The fine particles 14 were added to chloroform as the organic

solvent 37, which was processed by ultrasonic processing of the dispersion step 31, to obtain the dispersion liquid 38. Also, the catechol group-containing compound 15 was dissolved in chloroform as the organic solvent 37, to obtain the first solution 39.

The first solution 39 was added to the dispersion liquid 38, and supplied to the homogenizing step 33. The homogenizing step 33 included stirring and ultrasonic processing after the stirring. Then the second solution 42 of the catechol group-containing compound 15 was obtained, in which the fine particles 14 were dispersed homogeneously in the entirety of the solution.

The second solution 42 was provided to the hydrophilizing step 34. The hydrophilizing step 34 was the following. At first, acetone was the second solution 42 at an equal amount, and centrifuged. After this centrifugation, the solution was centrifuged with a mixed solution of chloroform and acetone, and washed. A volume ratio between the chloroform and acetone in the mixed solution was set as chloroform: acetone = 1:1.

The second solution 42 after the hydrophilizing step 34 was supplied to the hydrophobizing step 35, to obtain the hydrophobic liquid 27. The organic solvent 43 was benzene.

In the protrusion/recess structure producing system 50, the protrusion/recess structure 10 was produced from the hydrophobic liquid 27 being obtained. Ratios of components in the hydrophobic liquid 27 were as follows:

fine particles 14 ($TiO_2$): 0.78 parts by mass
catechol group-containing compound 15: 0.07 parts by mass
organic solvent 43 (benzene): 99.15 parts by mass

In the first chamber cell 57a, the cast film 44 constituted by the hydrophobic liquid 27 was formed on the support 56. The cast film 44 immediately after being formed was 300 μm thick. In the second chamber cell 57b, the moist gas 400 was caused to contact the cast film 44 upon lapse of one minute from being formed, to form the water droplets 408 on the surface 44a of the cast film 44. In the third chamber cell 57c, the dry gas 402 was caused to contact the cast film 44 to evaporate the organic solvent 43 from the cast film 44. In the fourth chamber cell 57d, the dry gas 404 was caused to contact the cast film 44 of which the liquid content ZB of the organic solvent was 1 wt.%, to evaporate the water droplets 408 from the cast film 44. Thus, the protrusion/recess structure 10 was produced.

In the protrusion/recess structure 10 as obtained, the fine particles 14 were partially coated. Voids were observed respectively between the fine particles 14. The diameter D1 of the pores was 10 μm (see Figs. 22-25).

In relation to the protrusion/recess structure 10 being obtained, the film thickness reduction ratio was evaluated as degree of drop of fine particles or irregularity of the protrusion/recess structure. For the evaluation, the protrusion/recess structure 10 was thermally processed in the atmosphere at 600 deg. C. The protrusion/recess structure 10 after the thermal processing was evaluated according to the following criteria. The "thickness" below was the thickness of the protrusion/recess structure 10. This evaluation was also evaluation in view of heat resistance because of evaluating drop of fine particles or irregularity in the protrusion/recess structure due to the thermal processing.

$$\text{Film thickness reduction ratio (\%)} = (\text{thickness after thermal processing})/(\text{thickness before thermal processing}).100$$

A and B denote a success, and C denotes failure. A result of the evaluation was A.

A: the film thickness reduction ratio X was 5% or less.
B: the film thickness reduction amount ratio X was in a range more than 5% and equal to or less than 20%.
C: the film thickness reduction amount ratio X was more than 20%.

EXAMPLE 2

The homogenizing step 33 was not performed in the production flow 20. Remaining conditions other than this condition were the same as Example 1, to produce the protrusion/recess structure 10.

In the protrusion/recess structure 10 being obtained, the fine particles 14 were partially coated. Voids were found respectively between the fine particles 14. A pore diameter D1 was 10 μm. In relation to the protrusion/recess structure 10 being obtained, heat resistance was evaluated according to the same method and criteria as Example 1. A result of the evaluation was B.

EXAMPLE 3

The hydrophobic liquid 27 was prepared in the same manner as Example 1 except for a difference in using nanoparticles (particle diameter of approximately 100 nm) of $SiO_2$ in place of $TiO_2$ as the fine particles 14. The protrusion/recess structure 10 was produced by the same method as Example 1. In Figs. 26 and 27, a SEM photograph of the protrusion/recess structure 10 of the present example is indicated. In the protrusion/recess structure 10 being obtained, heat resistance was evaluated according to the same method and criteria as Example 1. A result of the evaluation was A.

EXAMPLE 4

The hydrophobic liquid 27 was prepared in the same manner as Example 1 except for a difference in using nanoparticles (particle diameter of approximately 200 nm) of hydroxyapatite (HyAp) in place of $TiO_2$ as the fine particles 14. The protrusion/recess structure 10 was produced by the same method as Example 1. In Figs. 28 and 29, a SEM photograph of the protrusion/recess structure 10 of the present example is indicated. In the protrusion/recess structure 10 being obtained, heat resistance was evaluated according to the same method and criteria as Example 1. A result of the evaluation was A.

EXAMPLE 5

The hydrophobic liquid 27 was prepared in the same manner as Example 1 except for a difference in using nanoparticles (particle diameter of approximately 50 nm) of $Al_2O_3$ in place of $TiO_2$ as the fine particles 14. The protrusion/recess structure 10 was produced by the same method as Example 1. In Figs. 30 and 31, a SEM photograph of the protrusion/recess structure 10 of the present example is indicated. In the protrusion/recess structure 10 being obtained, heat resistance was evaluated according to the same method and criteria as Example 1. A result of the evaluation was A.

EXAMPLE 6

The hydrophobic liquid 27 was prepared in the same manner as Example 1 except for a difference in using nanoparticles (particle diameter of approximately 200 nm) of ZnO in place of $TiO_2$ as the fine particles 14. The protrusion/recess structure 10 was produced by the same method as Example 1. In Figs. 32 and 33, a SEM photograph of the protrusion/recess structure 10 of the present example is indicated. In the protrusion/recess structure 10 being obtained, heat resistance was evaluated according to the same method and criteria as Example 1. A result of the evaluation was A.

[Comparison 1]

Polymer expressed in a formula (11) was used instead of the catechol group-containing compound 15 to prepare hydrophobic liquid. A protrusion/recess structure was produced from the hydrophobic liquid by the same method as Example 1.

[Chemical 11]

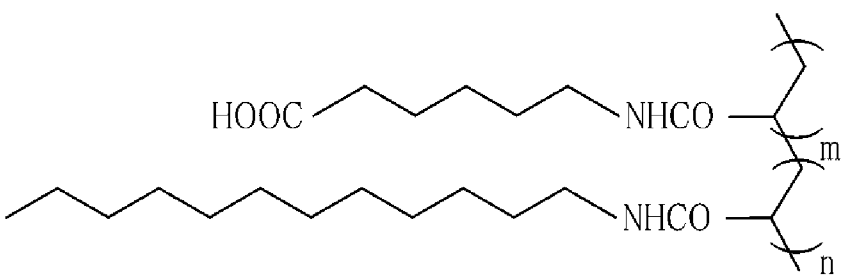

...formula (11)

(m:n=1:4)

In the protrusion/recess structure, voids were observed respectively between the fine particles 14. The pore diameter D1 was 10 μm. In the protrusion/recess structure being obtained, heat resistance was evaluated according to

the same method and criteria as Example 1. A result of the evaluation was C.

DESCRIPTION OF THE REFERENCE NUMERALS

10, 85, 90, 95, 100, 105, 120 protrusion/recess structure
12, 91, 96, 101, 106 pores
14, 86 fine particles
27 hydrophobic liquid
44 cast film
50 protrusion/recess structure producing system
56 support
408 water droplets

## Claims

1. A method of producing a protrusion/recess structure (10, 85, 90, 95, 100, 105, 120) having protrusions or recesses formed on a surface (10a, 121a), comprising:

   - casting a solution (27) of a dissolved amphipathic high molecular compound (15) having a catechol group, the solution contains a hydrophobic organic solvent and plural hydrophobic fine particles (14, 86) dispersed therein, on a support to form a cast film (44),
   - forming water droplets (408) by condensation on the cast film; and
   - evaporating the organic solvent from the cast film until the fluidity of the fine particles becomes lost which occurs when a liquid content (ZB) of the organic solvent in the cast film becomes equal to or less than 50 wt.% when the liquid content (ZB) of the organic solvent in the cast film is defined by (M1/M2).100 where M1 is a mass of a dispersant contained in the cast film and M2 is a mass of the fine particles contained in the cast film; and
   - evaporating the water droplets from the cast film in which the fluidity of the fine particles (14, 86) has been lost, to form the protrusion/recess structure of a film form.

2. The method of claim 1, wherein the organic solvent evaporating step is performed until a liquid content (ZB) of the organic solvent in the cast film becomes equal to or less than 30 wt.% when the liquid content (ZB) of the organic solvent in the cast film is defined by (M1/M2).100 where M1 is a mass of a dispersant contained in the cast film and M2 is a mass of the fine particles contained in the cast film.

## Patentansprüche

1. Verfahren zur Herstellung einer Vorsprung-/Vertiefungsstruktur (10, 85, 90, 95, 100, 105, 120) mit Vorsprüngen oder Vertiefungen, die auf einer Oberfläche (10a, 121a) gebildet sind, umfassend:

   - Gießen einer Lösung (27) einer gelösten, amphipathischen, hochmolekularen Verbindung (15) mit einer Catecholgruppe, die Lösung enthaltend ein hydrophobes, organisches Lösungsmittel und eine darin dispergierte Vielzahl hydrophober Feinteilchen (14, 86), auf einen Träger zur Bildung eines Gussfilms (44),
   - Bilden von Wassertröpfchen (408) durch Kondensation auf dem Gussfilm; und
   - Verdampfen des organischen Lösungsmittels von dem Gussfilm bis die Fließfähigkeit der Feinteilchen verloren geht, was auftritt, wenn ein Flüssigkeitsgehalt (ZB) des organischen Lösungsmittels in dem Gussfilm gleich oder weniger als 50 Gew.-% wird, wenn der Flüssigkeitsgehalt (ZB) des organischen Lösungsmittels in dem Gussfilm durch (M1/M2).100 definiert ist, wobei M1 eine Masse eines in dem Gussfilm enthaltenen Dispergiermittels ist und M2 eine Masse der in dem Gussfilm enthaltenen Feinteilchen ist; und
   - Verdampfen der Wassertröpfchen von dem Gussfilm, in dem die Fließfähigkeit der Feinteilchen (14, 86) verloren gegangen war, zur Bildung der Vorsprung-/Vertiefungsstruktur einer Filmform.

2. Verfahren gemäß Anspruch 1, worin das Verdampfen des organischen Lösungsmittels durchgeführt wird bis ein Flüssigkeitsgehalt (ZB) des organischen Lösungsmittels in dem Gussfilm gleich oder weniger als 30 Gew.-% wird, wenn der Flüssigkeitsgehalt (ZB) des organischen Lösungsmittels in dem Gussfilm durch (M1/M2).100 definiert ist,

wobei M1 eine Masse eines in dem Gussfilm enthaltenen Dispergiermittels ist und M2 eine Masse der in dem Gussfilm enthaltenen Feinteilchen ist.

## Revendications

1. Procédé de production d'une structure saillies/cavités (10, 85, 90, 95, 100, 105, 120) ayant des saillies ou des cavités formées sur une surface (10a, 121a), comprenant :

   - le coulage d'une solution (27) d'un composé amphipathique de poids moléculaire élevé dissous (15) ayant un groupe catéchol, la solution contenant un solvant organique hydrophobe et une pluralité de particules fines hydrophobes (14, 86) dispersées à l'intérieur, sur un support pour former un film coulé (44),
   - la formation de gouttelettes d'eau (408) par condensation sur le film coulé ; et
   - l'évaporation du solvant organique du film coulé jusqu'à ce que la fluidité des particules fines se perde ce qui survient lorsqu'une teneur en liquide (ZB) du solvant organique dans le film coulé devient inférieure ou égale à 50 % en poids lorsque la teneur en liquide (ZB) du solvant organique dans le film coulé est définie par (M1/M2).100 où Ml est une masse d'un dispersant contenu dans le film coulé et M2 est une masse des particules fines contenues dans le film coulé ; et
   - l'évaporation des gouttelettes d'eau du film coulé dans lequel la fluidité des particules fines (14, 86) a été perdue, pour former la structure saillies/cavités d'une forme de film.

2. Procédé selon la revendication 1, dans lequel l'étape d'évaporation de solvant organique est réalisée jusqu'à ce qu'une teneur en liquide (ZB) du solvant organique dans le film coulé soit inférieure ou égale à 30 % en poids lorsque la teneur en liquide (ZB) du solvant organique dans le film coulé est définie par (M1/M2).100 où Ml est une masse d'un dispersant contenu dans le film coulé et M2 est une masse des particules fines contenues dans le film coulé.

FIG.1

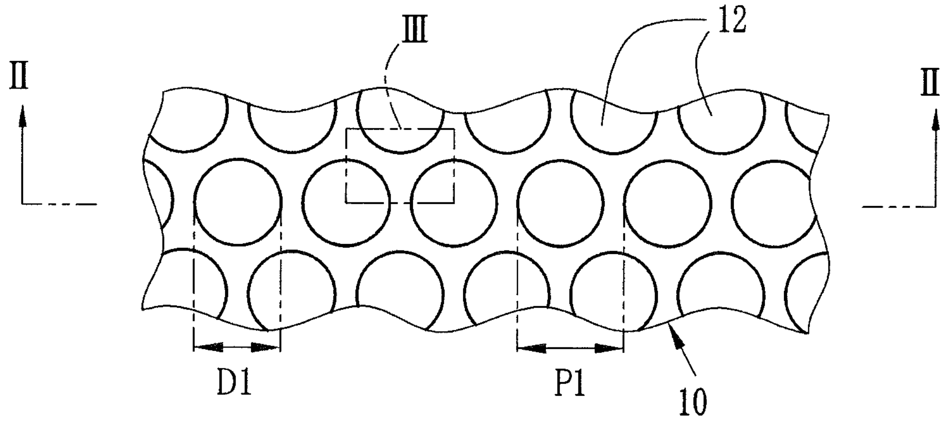


FIG.2

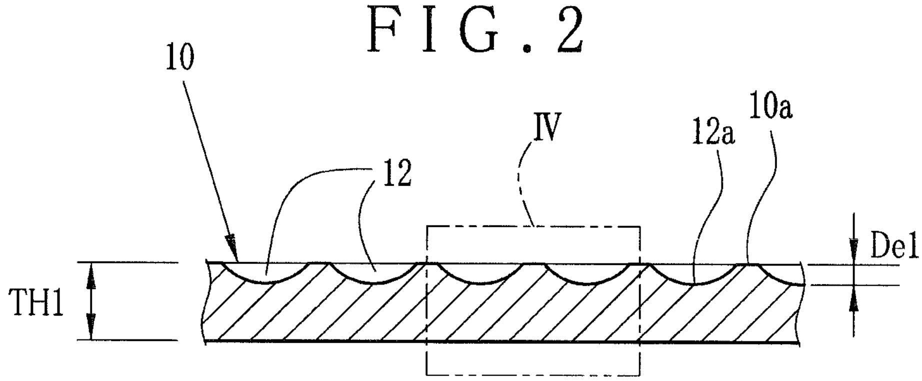


FIG.3

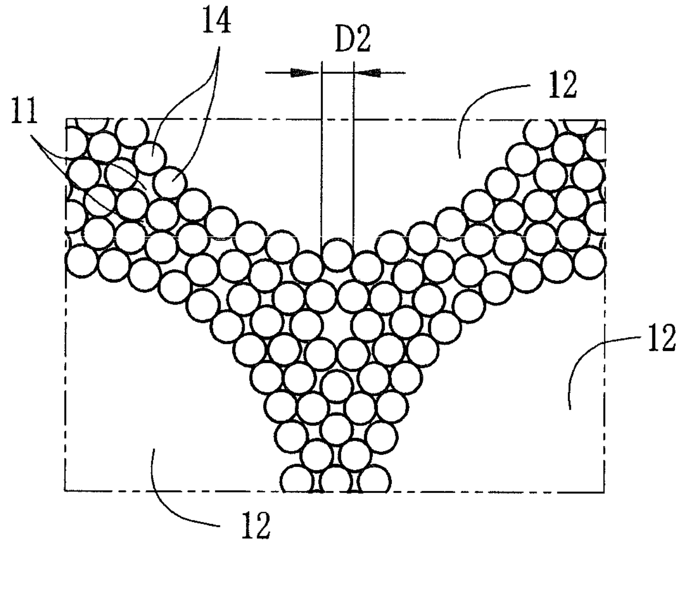

FIG. 4

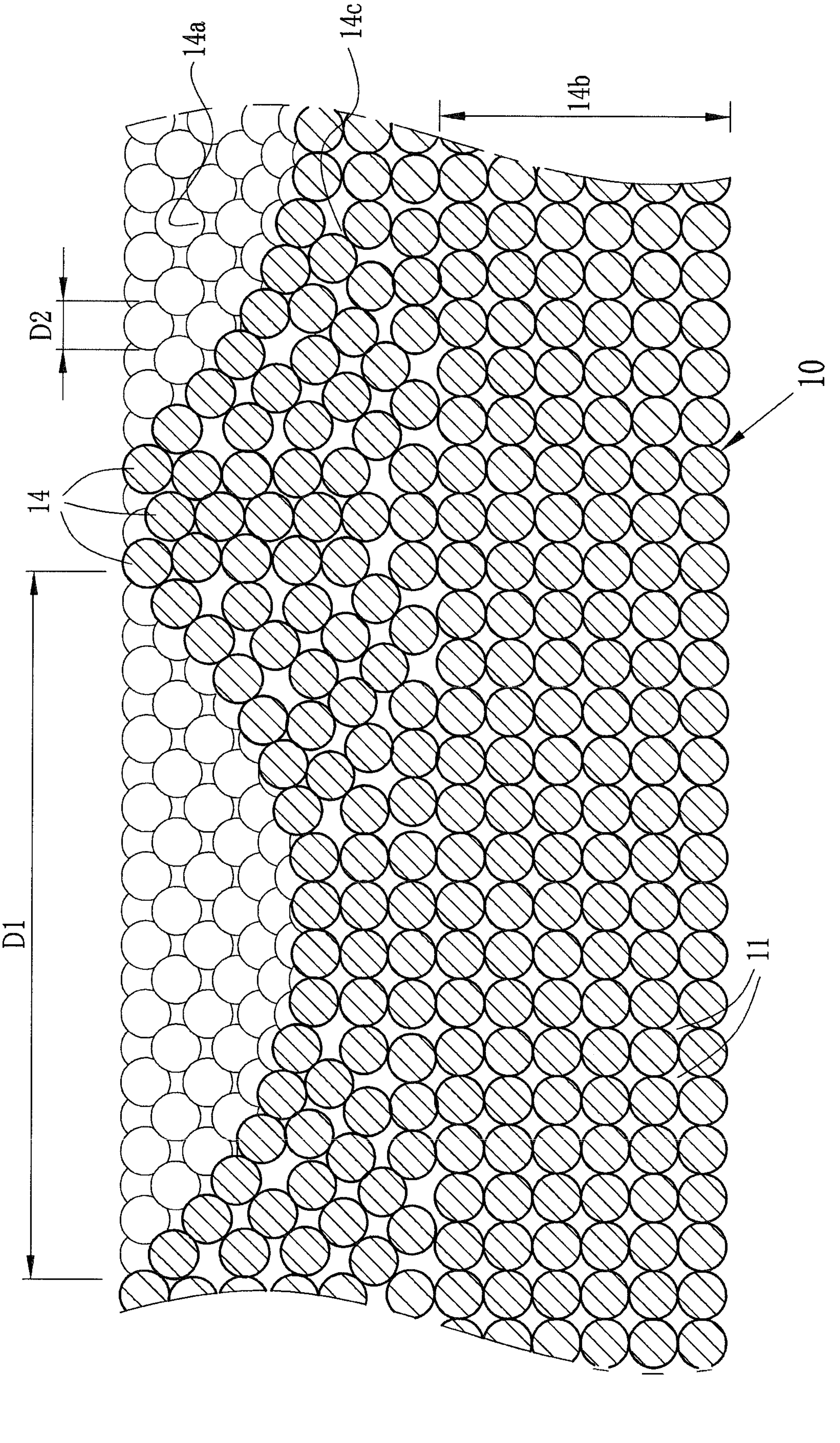

FIG. 5

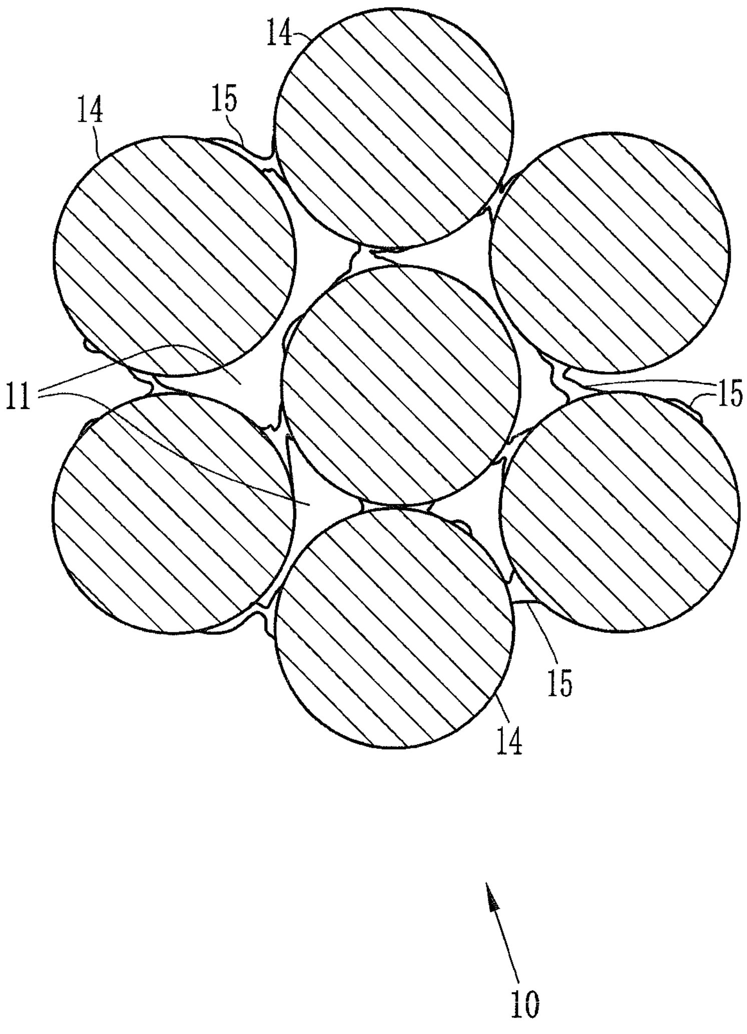

FIG. 6

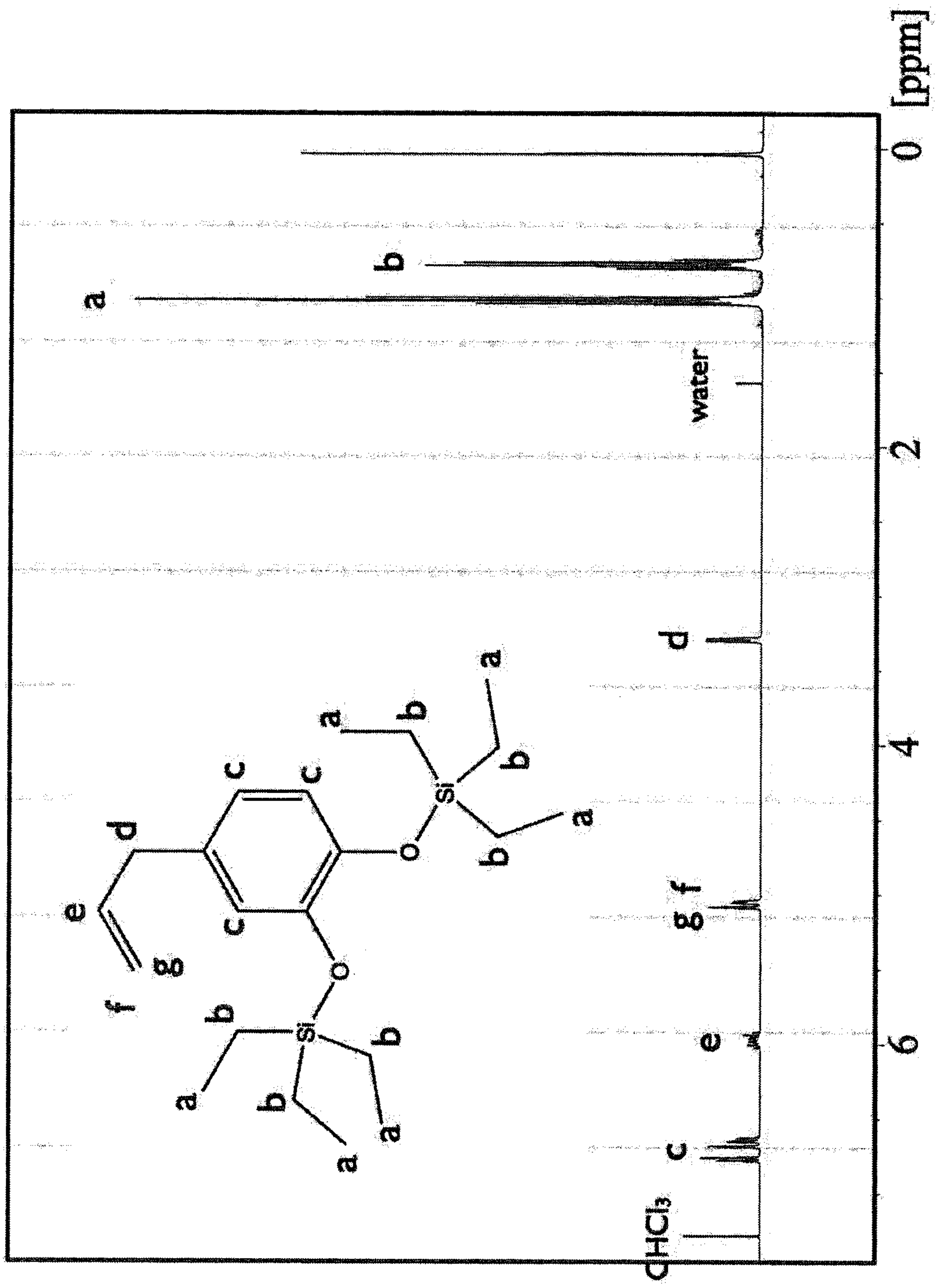

FIG. 7

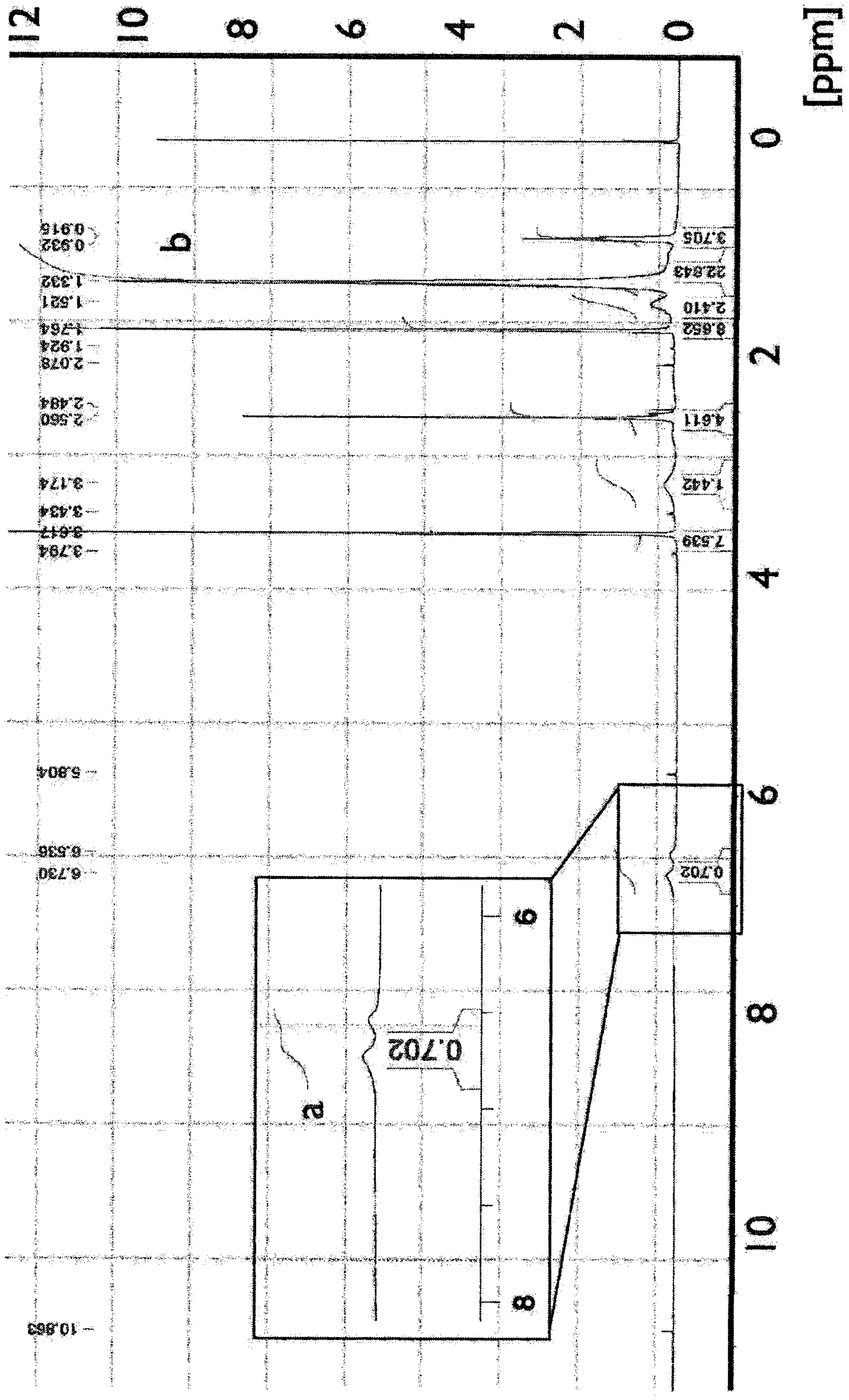
[ppm]
0
2
4
6
8
10
12
a
b
0.702
3.705
22.843
2.410
8.652
4.611
1.442
7.539
0.916
0.932
1.332
1.521
1.764
1.924
2.078
2.484
2.560
3.174
3.434
3.617
3.794
5.804
6.536
6.730
10.863

FIG. 8

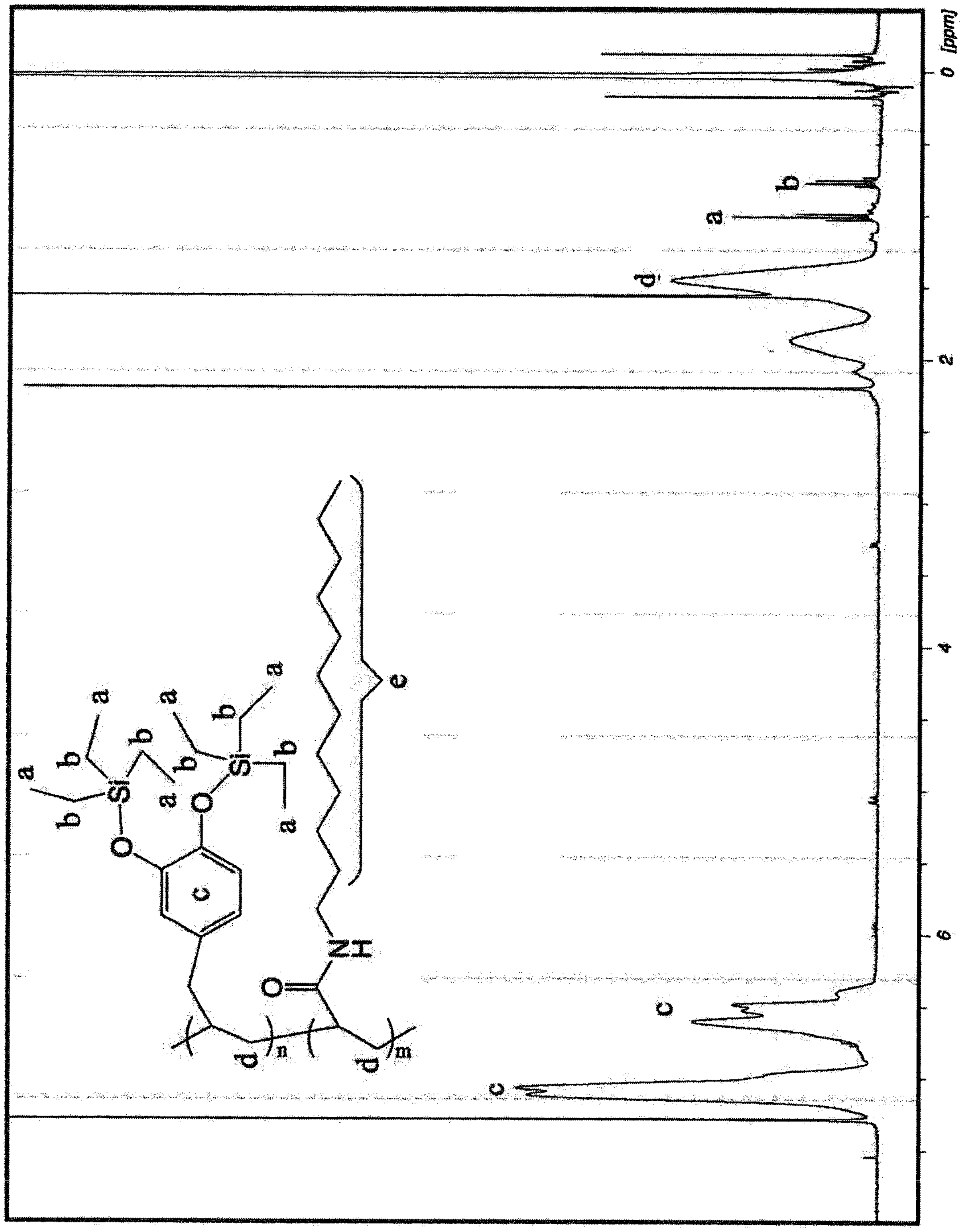

FIG. 9

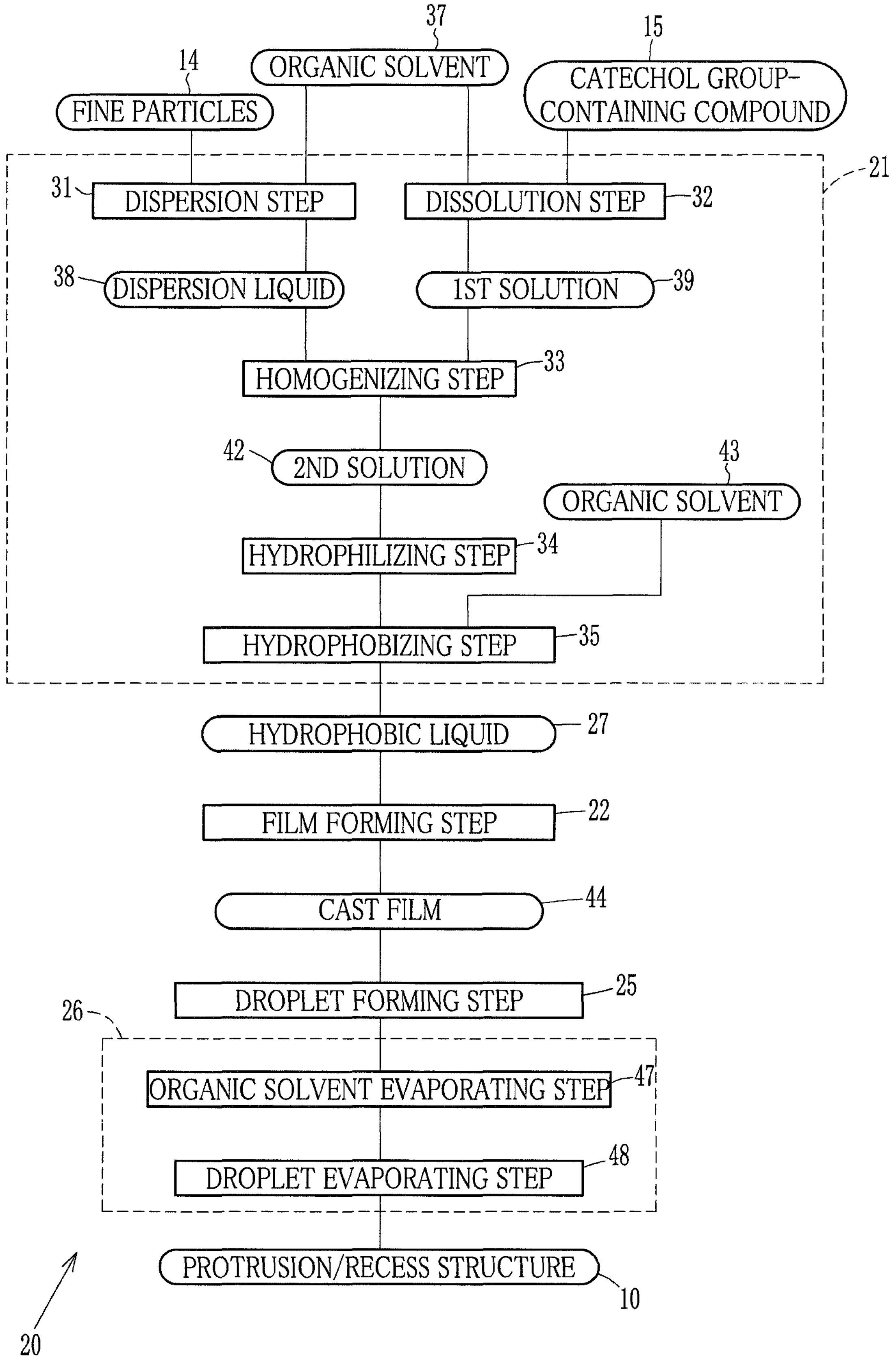

37
ORGANIC SOLVENT
15
CATECHOL GROUP-CONTAINING COMPOUND
14
FINE PARTICLES
21
31
DISPERSION STEP
DISSOLUTION STEP
32
38
DISPERSION LIQUID
1ST SOLUTION
39
HOMOGENIZING STEP
33
42
2ND SOLUTION
43
ORGANIC SOLVENT
HYDROPHILIZING STEP
34
HYDROPHOBIZING STEP
35
HYDROPHOBIC LIQUID
27
FILM FORMING STEP
22
CAST FILM
44
DROPLET FORMING STEP
25
26
ORGANIC SOLVENT EVAPORATING STEP
47
DROPLET EVAPORATING STEP
48
PROTRUSION/RECESS STRUCTURE
10
20

FIG. 10

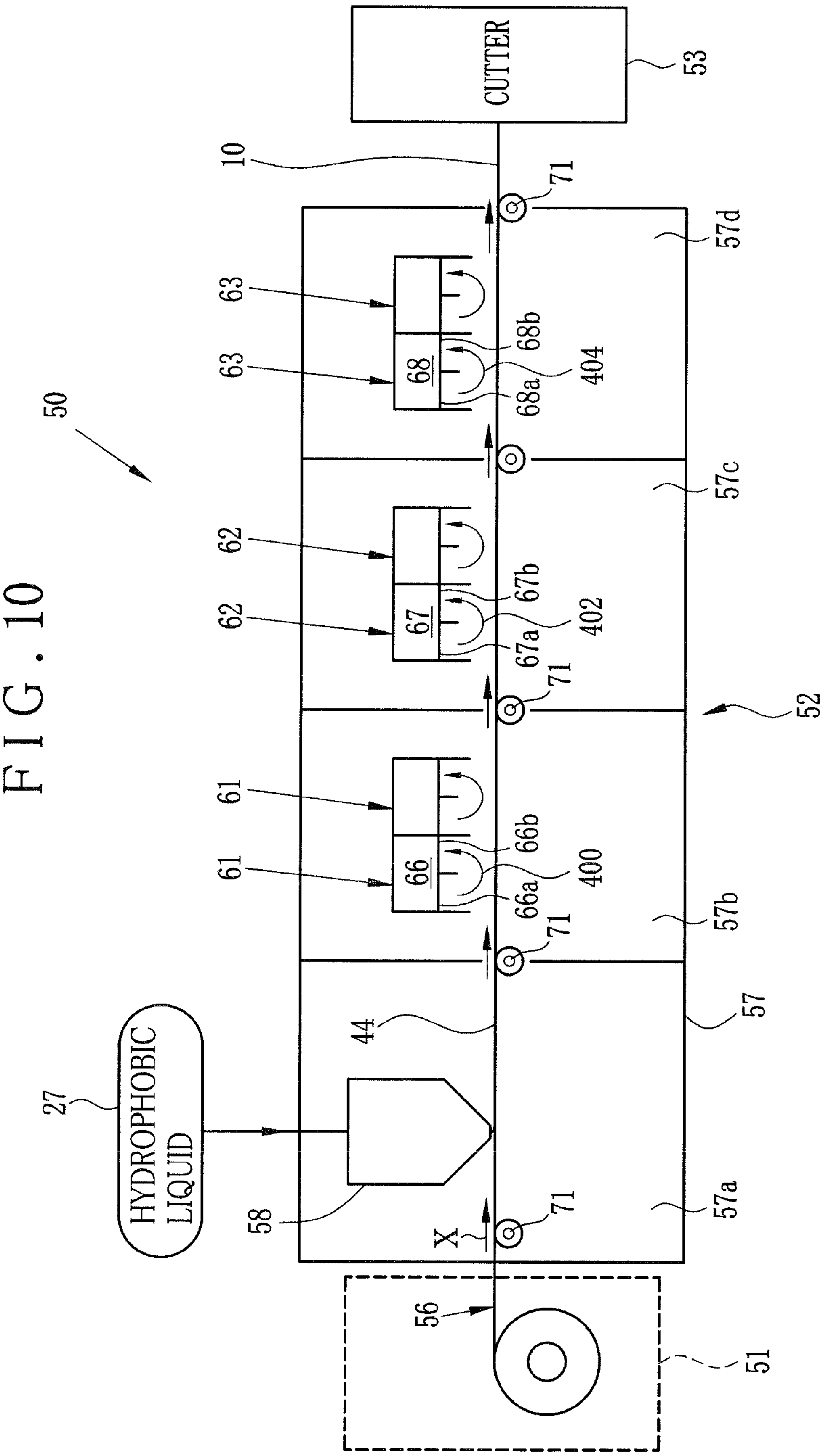
CUTTER
53
10
71
57d
63
63
68
68b
68a
404
50
57c
62
62
67
67b
67a
402
71
52
61
61
66
66b
66a
400
71
57b
44
57
HYDROPHOBIC
LIQUID
27
58
X
71
57a
56
51

FIG. 11

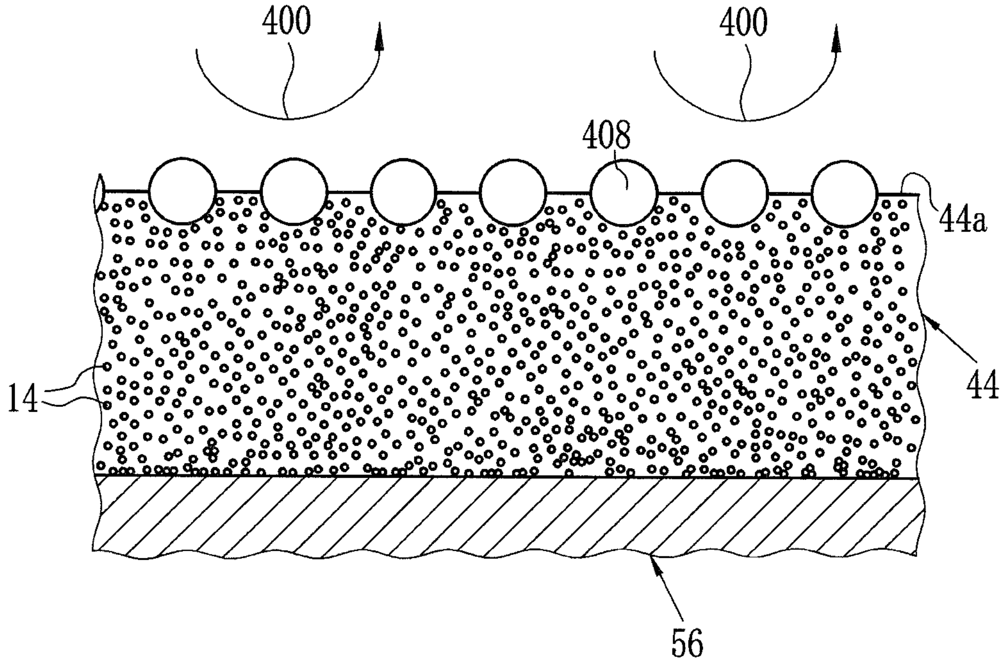


FIG. 12

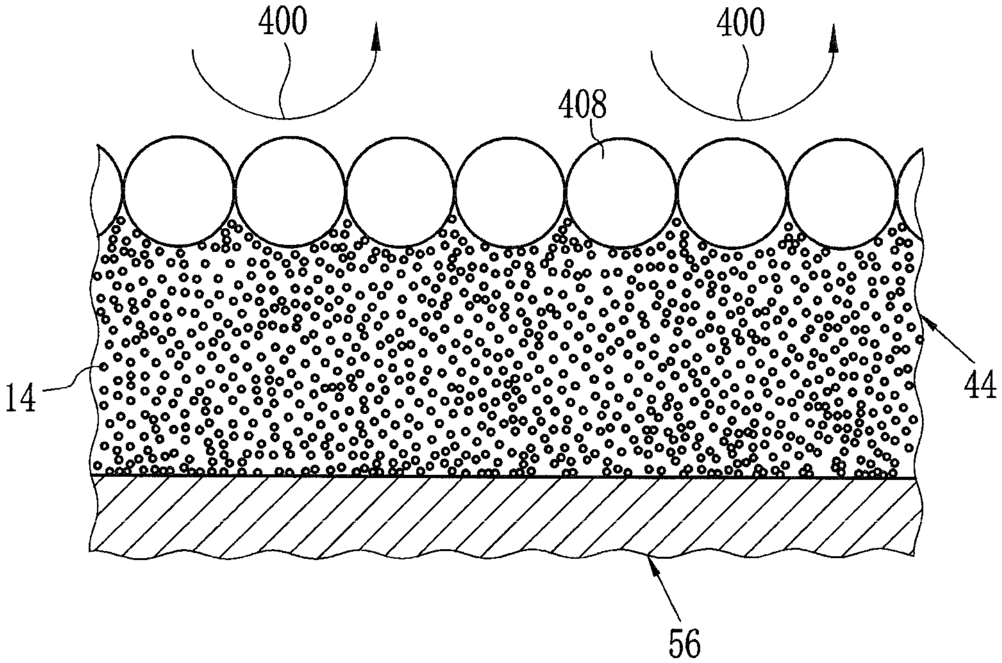

FIG. 13

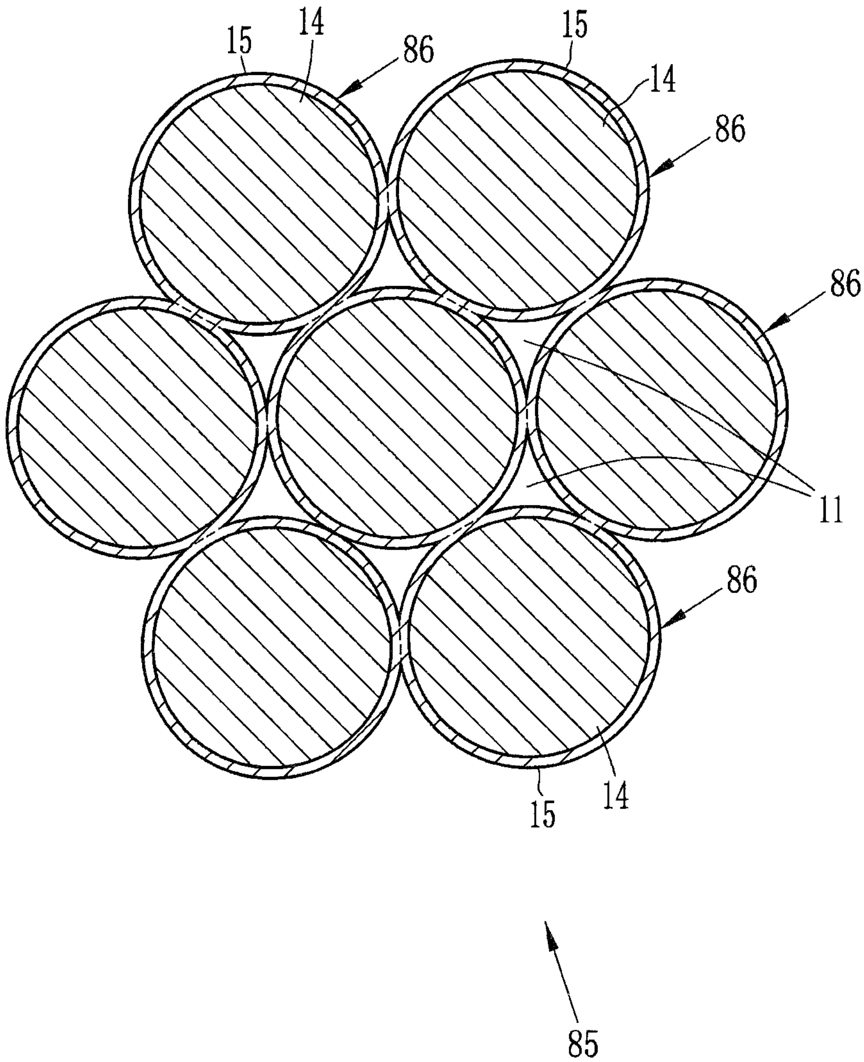

FIG. 14

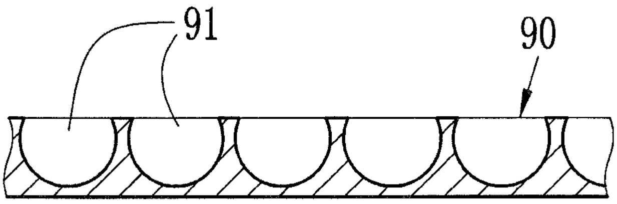


FIG. 15

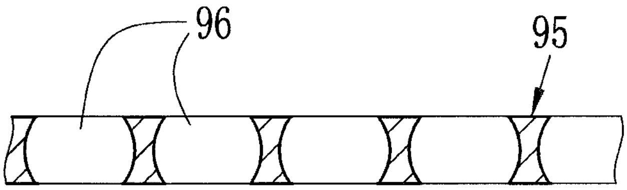


FIG. 16

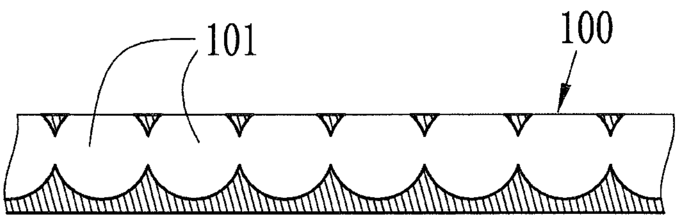


FIG. 17

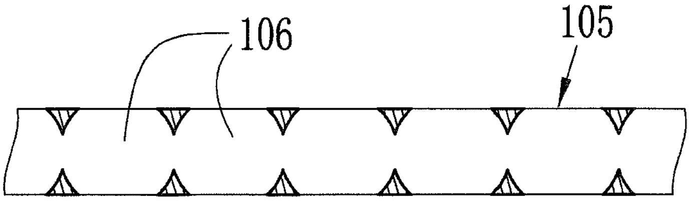

FIG. 18

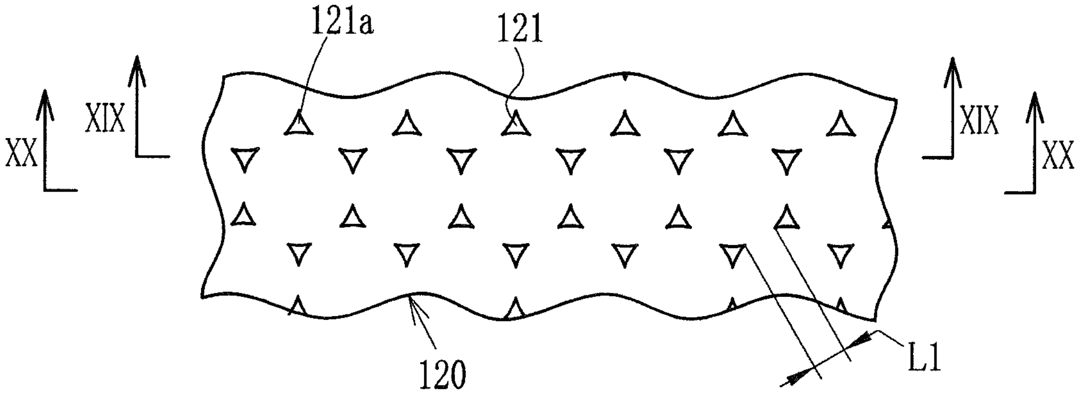


FIG. 19

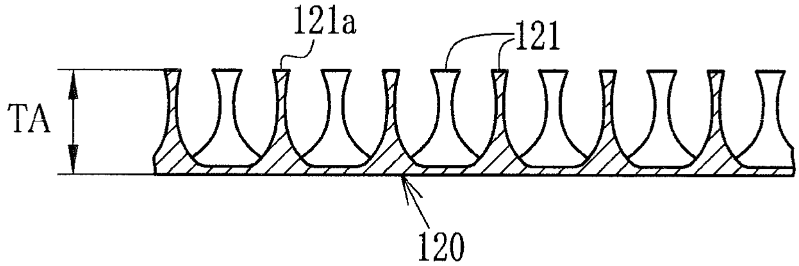


FIG. 20

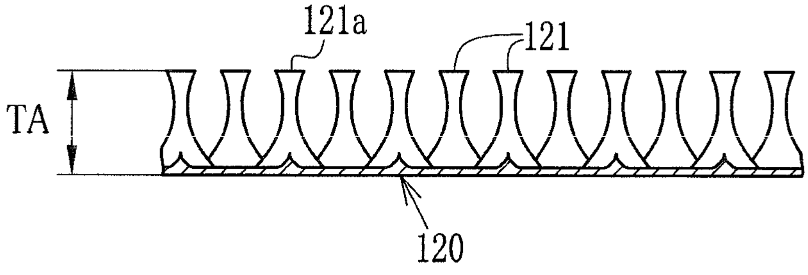

FIG. 21

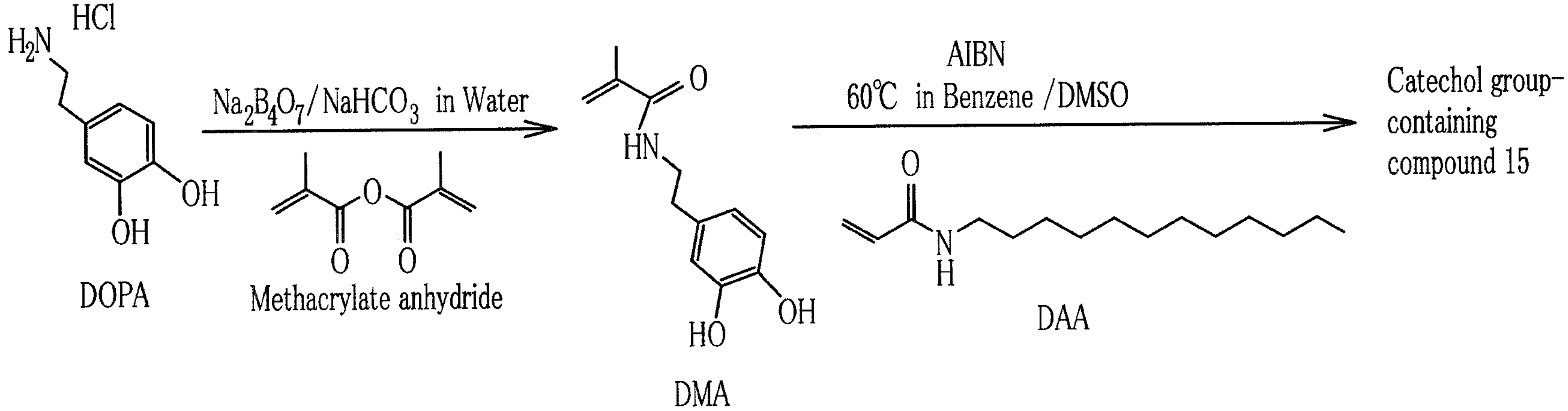
HCl
DOPA
$Na_2B_4O_7/NaHCO_3$ in Water
Methacrylate anhydride
DMA
AIBN
60℃ in Benzene /DMSO
DAA
Catechol group-containing compound 15

FIG. 22

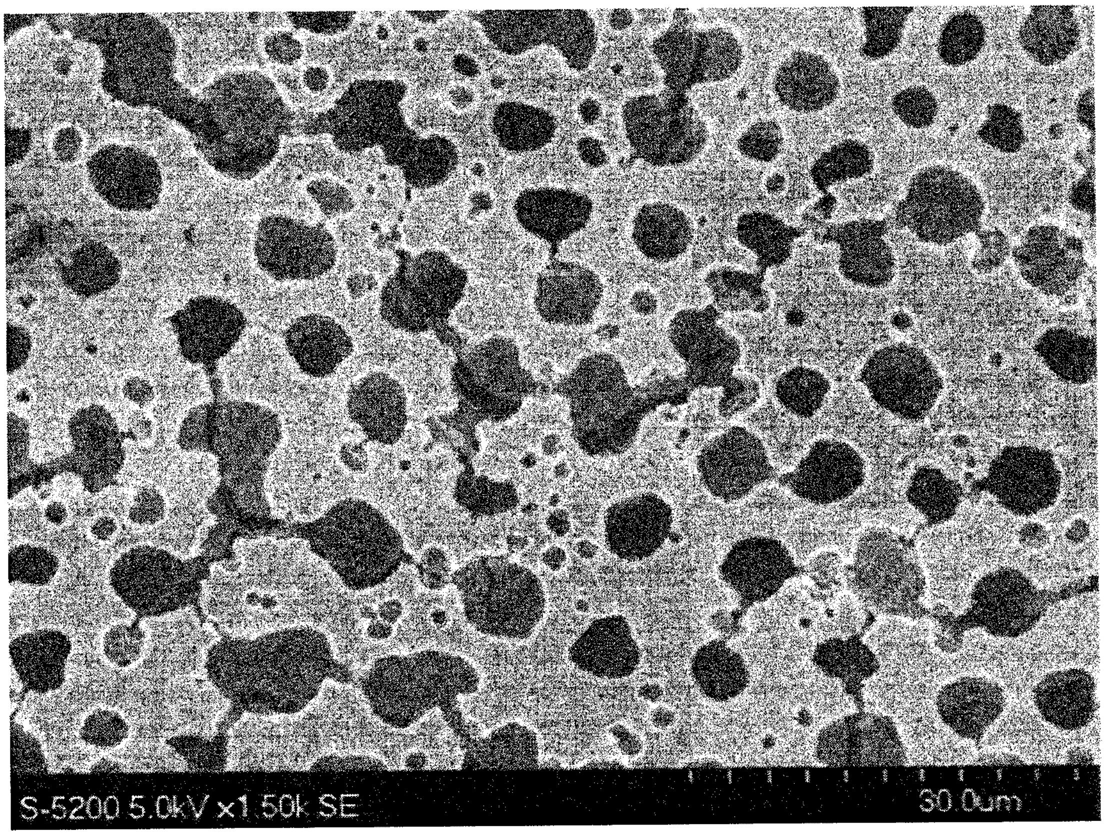

FIG. 23

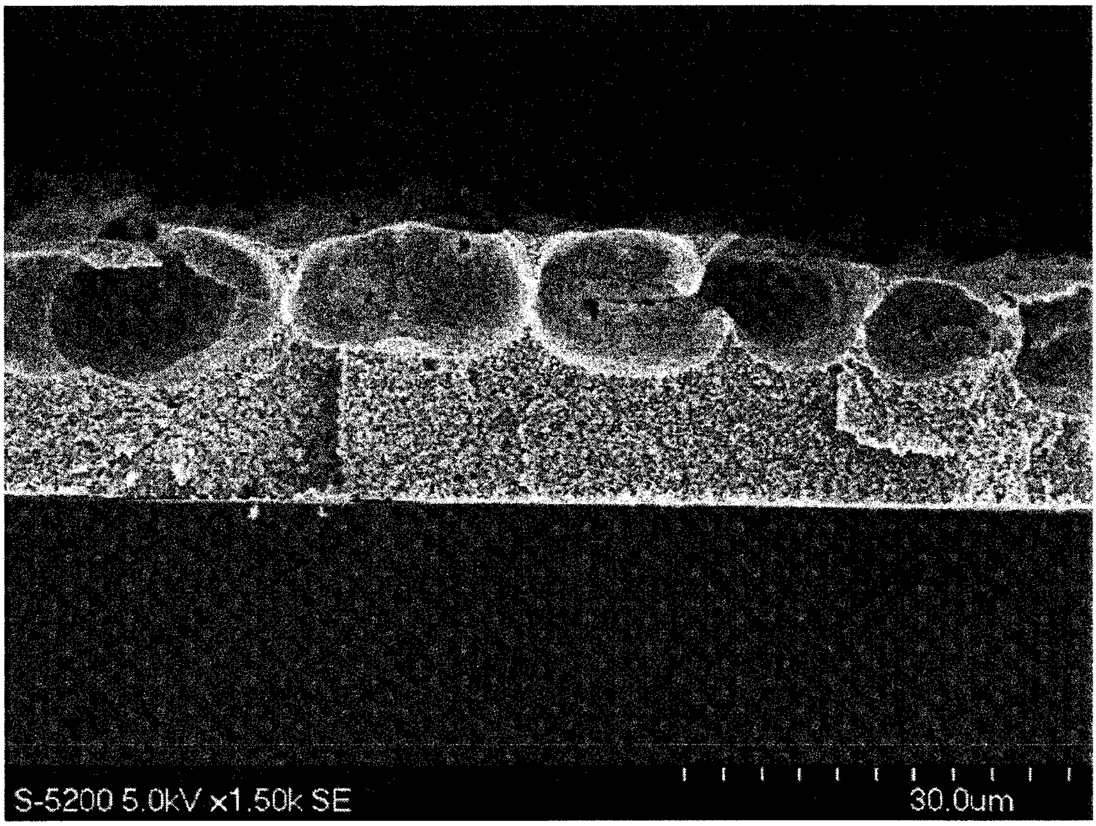

FIG. 24

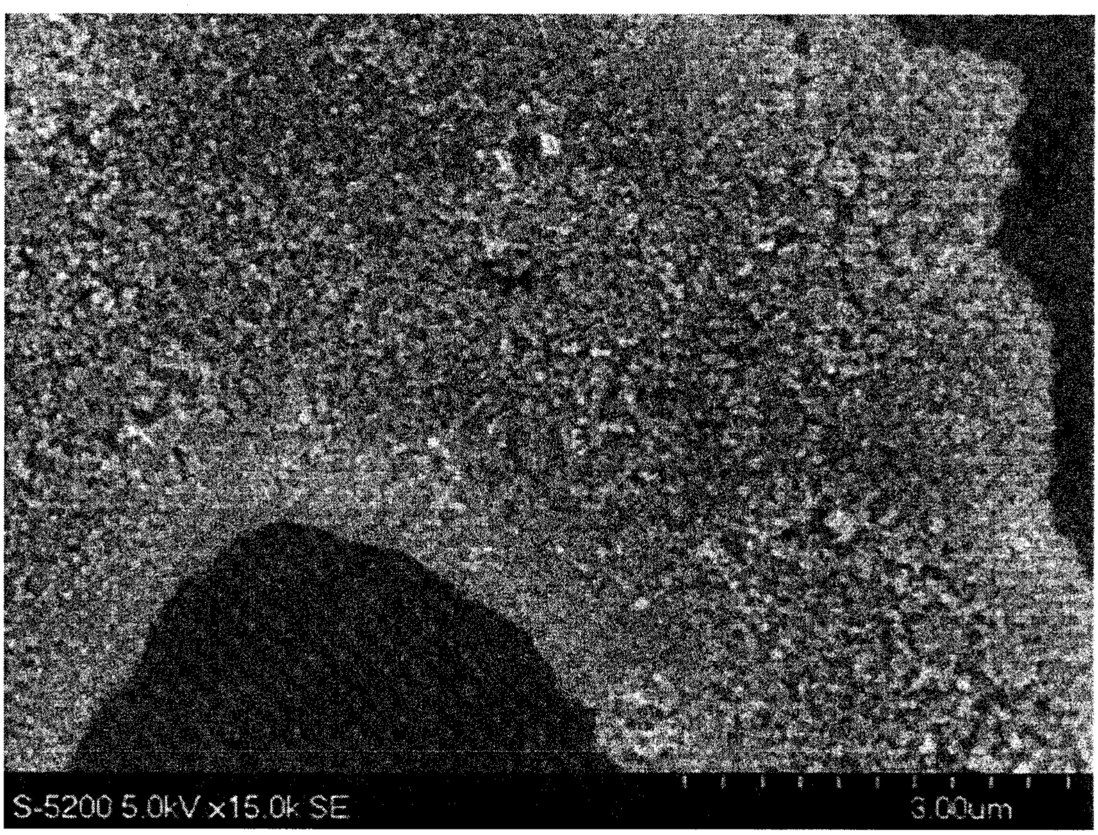

FIG. 25

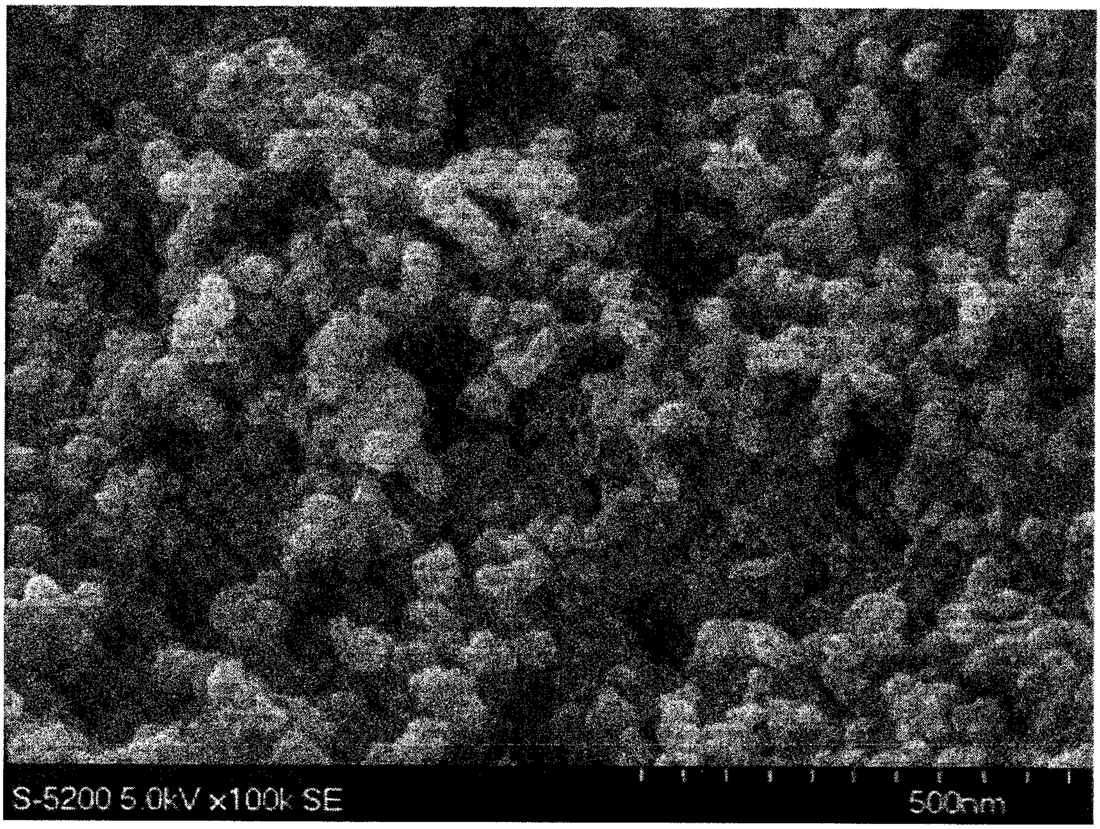

FIG. 26

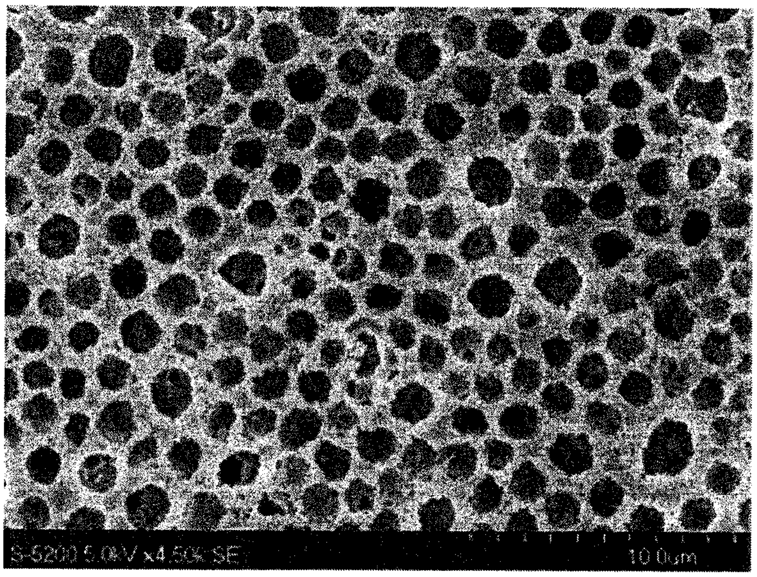


FIG. 27

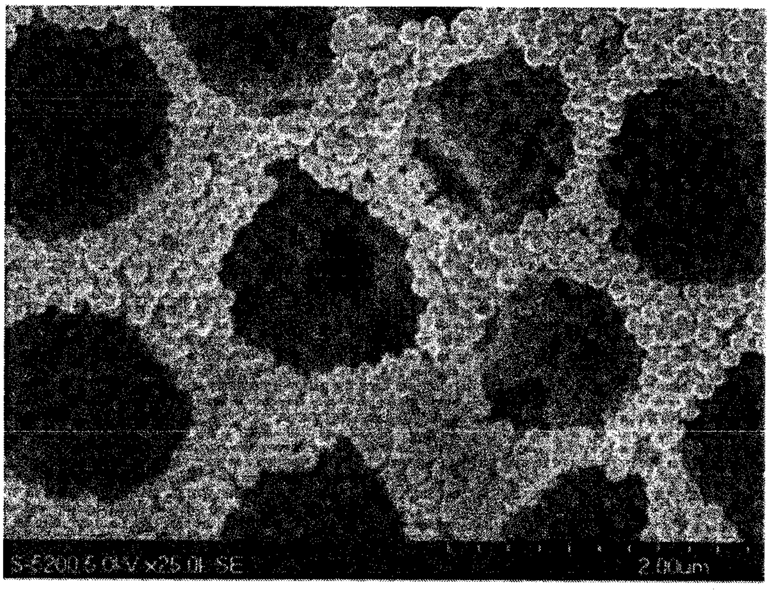

FIG. 28

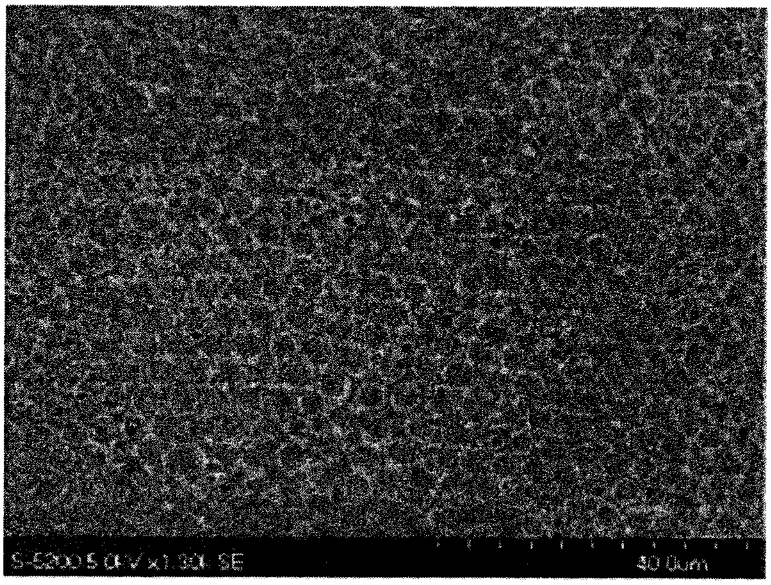


FIG. 29

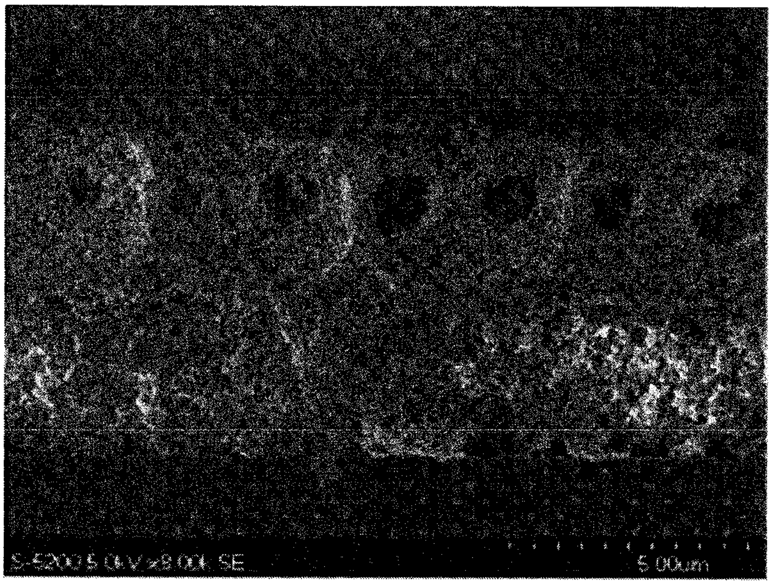

FIG. 30

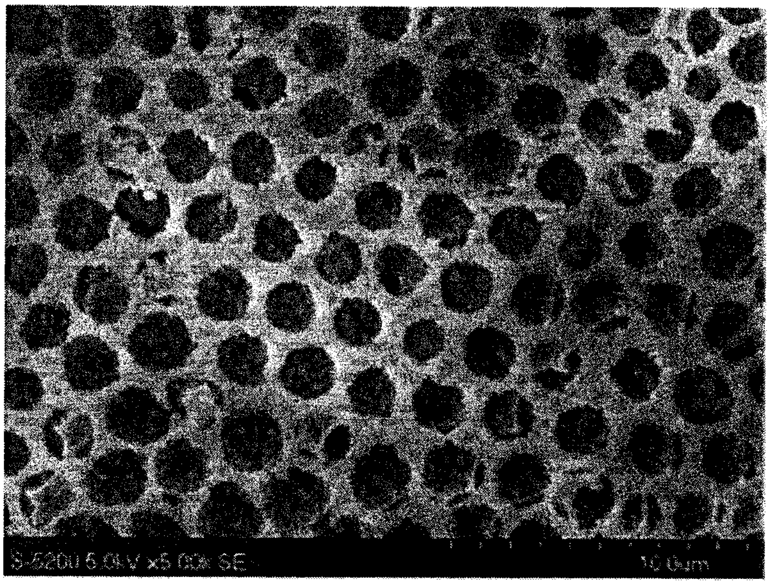


FIG. 31

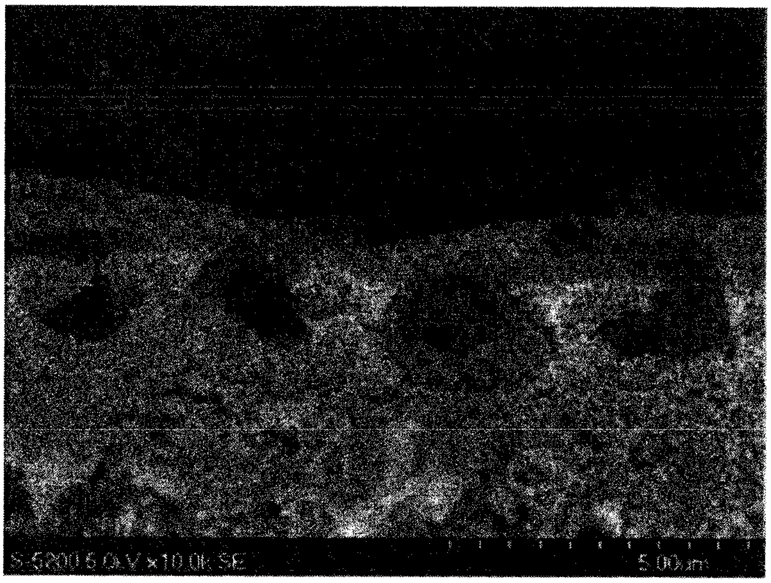

FIG. 32

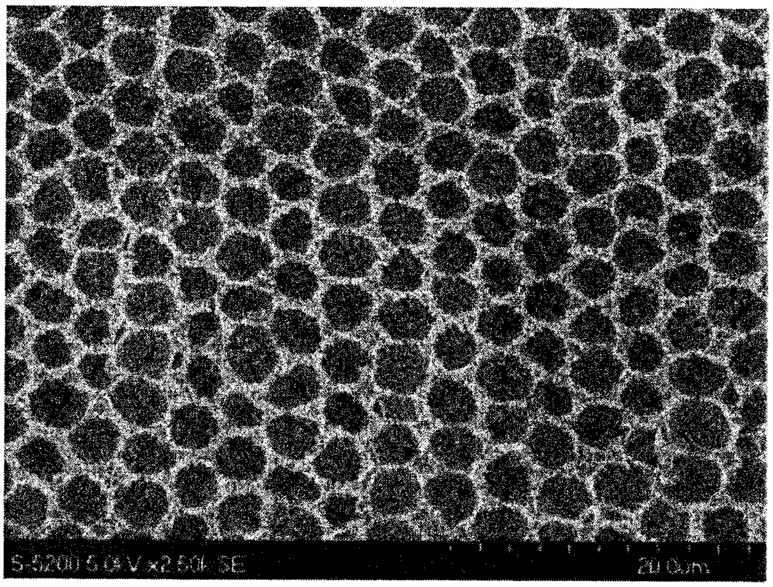

FIG. 33

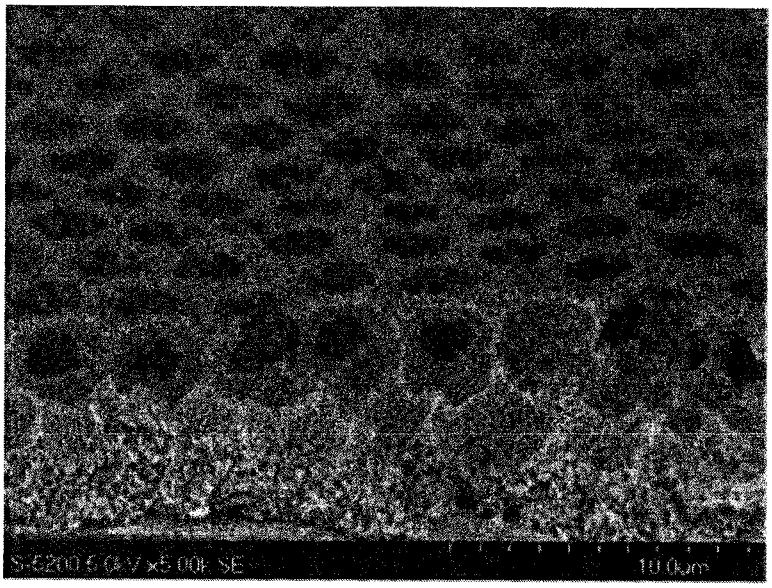

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011121051 A
- WO 2009041376 A


### Non-patent literature cited in the description


- **YUTA SAITO et al.** *Symposium on Macromolecules Yokoshu,* 2012, vol. 61 (2), 4657-4658